# EUROPEAN PATENT APPLICATION

(11) **EP 4 679 743 A1**
(43) Date of publication of application: **14.01.2026**
(21) Application number: 23926674.5
(22) Date of filing: 10.03.2023
(51) Int. Cl.: H04L 1/00

(54) **WIRELESS COMMUNICATION METHOD AND ZERO POWER CONSUMPTION DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: Mewburn Ellis LLP
(86) International application number: PCT/CN2023/080866
(87) International publication number: WO 2024/187315

(57) **Abstract**

Embodiments of the present disclosure provide a wireless communication method and a zero-power device. The method relates to the field of communication. The method includes the following. A second sequence is obtained by performing repetition encoding based on a first sequence to be encoded. With the method, redundant information is added by repetition encoding, such that a receiving end can perform error correction and error detection on a decoded result of the first sequence when decoding the first sequence based on the second sequence, thereby enhancing the data transmission performance of the zero-power device.

## Description

### TECHNICAL FIELD

This disclosure relates to the field of communication, in particular to a wireless communication method and a zero-power device.

### BACKGROUND

Zero-power devices have low complexity and low cost, can be maintenance-free and battery-free, can support energy harvesting and/or backscatter communication, and thus can realize large-density and large-scale deployment at a relatively low cost. However, at present, the zero-power device has relatively poor data transmission performance, and how to enhance the data transmission performance of the zero-power device is a problem to be solved.

### SUMMARY

Embodiments of the present disclosure provide a wireless communication method and a zero-power device, which can enhance data transmission performance of the zero-power device.

In a first aspect, embodiments of the present disclosure provide a wireless communication method. The wireless communication method is applied to a sending device and includes the following. A second sequence is obtained by performing repetition encoding based on a first sequence to be encoded.

In a second aspect, embodiments of the present disclosure provide a wireless communication method. The wireless communication method is applied to a sending device and includes the following. A first sequence is obtained by performing repetition decoding based on a second sequence to be decoded.

In a third aspect, embodiments of the present disclosure provide a sending device. The sending device is configured to perform the method in the first aspect or in various embodiments thereof. Specifically, the sending device includes functional modules configured to perform the method in the first aspect or in various embodiments thereof.

In an embodiment, the sending device may include a processing unit. The processing unit is configured to perform a function related to information processing. For example, the processing unit may be a processor.

In an embodiment, the sending device can include a sending unit and/or a receiving unit. The sending unit is configured to perform a function related to transmission, and the receiving unit is configured to perform a function related to reception. For example, the sending unit may be a sender or a transmitter, and the receiving unit may be a receiver or a receiving machine. For another example, the sending device is a communication chip, the receiving unit may be an input circuit or an interface of the communication chip, and the sending unit may be an output circuit or an interface of the communication chip.

In a fourth aspect, embodiments of the present disclosure provide a receiving device. The receiving device is configured to perform the method in the second aspect or in various embodiments thereof. Specifically, the receiving device includes functional modules configured to perform the method in the second aspect or in various embodiments thereof.

In an embodiment, the receiving device may include a processing unit. The processing unit is configured to perform a function related to information processing. For example, the processing unit may be a processor.

In an embodiment, the receiving device can include a sending unit and/or a receiving unit. The sending unit is configured to perform a function related to transmission, and the receiving unit is configured to perform a function related to reception. For example, the sending unit may be a sender or a transmitter, and the receiving unit may be a receiver or a receiving machine. For another example, the receiving device is a communication chip, the receiving unit may be an input circuit or an interface of the communication chip, and the sending unit may be an output circuit or an interface of the communication chip.

In a fifth aspect, embodiments of the present disclosure provide a sending device. The sending device includes a processor and a memory. The memory is configured to store a computer program. The processor is configured to invoke and execute the computer program stored in the memory, to perform the method in the first aspect or in various embodiments thereof.

In an embodiment, the processor is one or more, and the memory is one or more.

In an embodiment, the memory may be integrated with the processor, or the memory may be disposed separately from the processor.

In an embodiment, the sending device further includes a sender (transmitter) and a receiver (receiving machine).

In a sixth aspect, embodiments of the present disclosure provide a receiving device. The receiving device includes a processor and a memory. The memory is configured to store a computer program. The processor is configured to invoke and execute the computer program stored in the memory, to perform the method in the second aspect or in various embodiments thereof.

In an embodiment, the processor is one or more, and the memory is one or more.

In an embodiment, the memory may be integrated with the processor, or the memory may be disposed separately from the processor.

In an embodiment, the receiving device further includes a sender (transmitter) and a receiver (receiving machine).

In a seventh aspect, embodiments of the present disclosure provide a chip. The chip is configured to implement the method in any one of the first aspect and the second aspect or in various embodiments thereof. Specifically, the chip includes a processor. The processor is configured to invoke and execute a computer program stored in a memory, to cause a device equipped with the chip to perform the method in any one of the first aspect and the second aspect or in various embodiments thereof.

In an eighth aspect, embodiments of the present disclosure provide a computer-readable storage medium. The computer-readable storage medium is configured to store a computer program which, when executed on a computer, causes the computer to perform the method in any one of the first aspect and the second aspect or in various embodiments thereof.

In a ninth aspect, embodiments of the present disclosure provide a computer program product. The computer program product includes computer program instructions that cause a computer to perform the method in any one of the first aspect and the second aspect or in various embodiments thereof.

In a tenth aspect, embodiments of the present disclosure provide a computer program. The computer program, when executed on a computer, causes the computer to perform the method in any one of the first aspect and the second aspect or in various embodiments thereof.

Based on the technical solutions, the zero-power device obtains the second sequence by performing repetition encoding based on the first sequence to be encoded. In other words, redundant information is added by repetition encoding based on the first sequence, such that a receiving end can perform error correction and error detection on a decoded result of the first sequence when decoding the first sequence based on the second sequence, thereby enhancing the data transmission performance of the zero-power device.

### BRIEF DESCRIPTION OF THE DRAWINGS

FIG. 1 is a schematic diagram of a communication system provided in embodiments of the present disclosure.
FIG. 2 is a schematic diagram of a zero-power communication system provided in embodiments of the present disclosure.
FIG. 3 is a schematic diagram illustrating energy harvesting provided in embodiments of the present disclosure.
FIG. 4 is a schematic diagram illustrating backscatter communication provided in embodiments of the present disclosure.
FIG. 5 is a schematic circuit diagram illustrating resistance-based load modulation provided in embodiments of the present disclosure.
FIG. 6 is a schematic diagram illustrating non-return-to-zero (NRZ) encoding provided in embodiments of the present disclosure.
FIG. 7 is a schematic diagram illustrating unipolar return-to-zero (RZ) encoding provided in embodiments of the present disclosure.
FIG. 8 is a schematic diagram illustrating Manchester encoding provided in embodiments of the present disclosure.
FIG. 9 is a schematic diagram illustrating Miller encoding provided in embodiments of the present disclosure.
FIG. 10 is a schematic diagram illustrating differential binary phase (DBP) encoding provided in embodiments of the present disclosure.
FIG. 11 is a schematic diagram illustrating differential encoding provided in embodiments of the present disclosure.
FIG. 12 is a schematic diagram illustrating data 0, data 1, start of data frame (SOF), and end of data frame (EOF) in pulse interval encoding (PIE) provided in embodiments of the present disclosure.
FIG. 13 is a schematic diagram illustrating bi-phase space (FM0) encoding provided in embodiments of the present disclosure.
FIG. 14 is a schematic diagram illustrating an FM0 symbol and an FM0 symbol sequence in FM0 encoding provided in embodiments of the present disclosure.
FIG. 15 is a schematic diagram illustrating an on-off keying (OOK) modulation scheme provided in embodiments of the present disclosure.
FIG. 16 is a schematic flowchart of a wireless communication method provided in embodiments of the present disclosure.
FIG. 17 is an example illustrating a positional relationship between a check group and a parity bit in a first sequence provided in embodiments of the present disclosure.
FIG. 18 is another example illustrating a positional relationship between a check group and a parity bit in a first sequence provided in embodiments of the present disclosure.
FIG. 19 is an example illustrating an interleaving principle provided in embodiments of the present disclosure.
FIG. 20 is a schematic flowchart illustrating repetition encoding provided in embodiments of the present disclosure.
FIG. 21 is another schematic flowchart of a wireless communication method provided in embodiments of the present disclosure.
FIG. 22 is a schematic block diagram of a zero-power device provided in embodiments of the present disclosure.
FIG. 23 is another schematic block diagram of a zero-power device provided in embodiments of the present disclosure.
FIG. 24 is a schematic block diagram of a communication device provided in embodiments of the present disclosure.
FIG. 25 is a schematic block diagram of a chip provided in embodiments of the present disclosure.

### DETAILED DESCRIPTION

The following will describe technical solutions of the present disclosure with reference to accompanying drawings.

Embodiments of the present disclosure are applicable to various communication systems. For example, the communication systems to which embodiments of the present disclosure are applicable include, but are not limited to: a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a universal mobile telecommunication system (UMTS), a wireless local area network (WLAN), a wireless fidelity (WiFi), a next-generation communication system, a zero-power communication system, cellular internet of things (IoT), cellular passive IoT, or other communication systems.

The cellular IoT is a development product of a combination of a cellular mobile communication network and IoT. The cellular IoT is also referred to as "passive cellular IoT" that is a combination of a network device and a passive terminal. In the cellular passive IoT, the passive terminal may communicate with other passive terminals through the network device, or the passive terminal may communicate using a device-to-device (D2D) communication mode, while the network device only needs to send carrier signals, i.e., power-supply signals, to power the passive terminal.

Generally speaking, a conventional communication system supports a limited number (quantity) of connections and therefore is easy to implement. However, with the development of communication technology, a mobile communication system will not only support conventional communication but also support, for example, D2D communication, machine-to-machine (M2M) communication, machine type communication (MTC), vehicle-to-vehicle (V2V) communication, etc. Embodiments of the present disclosure are also applicable to these communication systems.

It may be understood that, the communication system in embodiments of the present disclosure is applicable to a carrier aggregation (CA) scenario, or is applicable to a dual connectivity (DC) scenario, or is applicable to a standalone (SA) network deployment scenario. There is no limitation on the type of spectrum in embodiments of the present disclosure. For example, embodiments of the present disclosure are applicable to a licensed spectrum, and also applicable to an unlicensed spectrum.

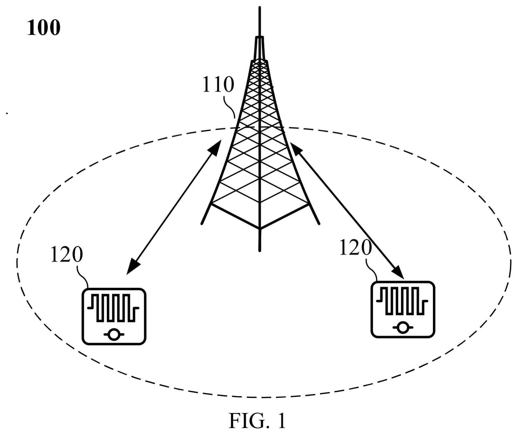

FIG. 1 is a schematic diagram of a communication system 100 provided in embodiments of the present disclosure.

As illustrated in FIG. 1, the communication system 100 may include a network device 110. The network device 110 may be a device for communicating with a terminal device 120 (also referred to as "communication terminal" or "terminal"). The network device 110 can provide a communication coverage for a specific geographical area and communicate with terminal devices in the coverage area.

Exemplarily, the network device 110 may be a device configured to communicate with a mobile device, and the network device 110 may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a future evolved PLMN, etc.

The network device 110 serves a cell, and the terminal device 120 communicates with the network device on a transmission resource (e.g., a frequency-domain resource or a spectrum resource) for the cell. The cell may be a cell corresponding to the network device 110 (e.g., a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

Exemplarily, the terminal device 120 may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc. The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), a zero-power device, etc.

For example, the terminal device 120 may be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

For another example, the terminal device 120 may also be a zero-power device. The zero-power device may be understood as a device with power consumption lower than a preset power consumption. For example, the zero-power device includes a passive terminal, even a semi-passive terminal, etc.

It may be understood that, FIG. 1 is only an example in the present disclosure and shall not be construed as a limitation to the present disclosure.

For example, in other alternative embodiments, the communication system 100 may include multiple network devices, and there may be other quantities of terminal devices in the coverage area of each of the network devices. For another example, in embodiments of the present disclosure, a device with communication functions in a network/system can be referred to as "communication device". Taking the communication system 100 illustrated in FIG. 1 as an example, the communication device may include the network device 110 and the terminal device(s) 120 that have communication functions. The network device 110 and the terminal device(s) 120 can be the devices described above and will not be repeated herein. The communication device may further include other devices such as a network controller, a mobility management entity, or other network entities in the communication system 100, which will not be limited in embodiments of the present disclosure.

In addition, it may also be understood that, the terms "system" and "network" herein are usually used interchangeably throughout the present disclosure. The term "and/or" herein only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship. The term "correspondence" herein may mean that there is a direct or indirect correspondence between the two, may mean that there is an association between the two, or may mean a relationship of indicating and indicated or configuring and configured, etc. The term "indication" herein may be a direct indication, may be an indirect indication, or may mean that there is an association relationship. For example, *A* indicates *B* may mean that *A* directly indicates *B,* for instance, *B* can be obtained according to *A;* may mean that *A* indirectly indicates *B,* for instance, *A* indicates C, and *B* can be obtained according to C; or may mean that there is an association relationship between *A* and *B.* The term "pre-defined" herein can be implemented by pre-saving a corresponding code or table in a device (e.g., including the terminal device and the network device) or in other manners that can be used for indicating related information, and the present disclosure is not limited in this regard. For example, the "pre-defined" may mean defined in a protocol. It may also be understood that, in embodiments of the present disclosure, the "protocol" may refer to a communication standard protocol, which may include, for example, an LTE protocol, an NR protocol, and a protocol applied to a future communication system, which is not limited in the present disclosure.

In order to facilitate understanding of the technical solutions of embodiments of the present disclosure, the zero-power device and the related art will be described.

The zero-power device is a radio frequency identification (RFID) tag, which is a technology that utilizes spatial coupling of wireless radio frequency (RF) signals to achieve a contactless automatic transmission and recognition of tag information. The RFID tag is also referred to as "RF tag" or "electronic tag". The types of electronic tags are classified based on different power-supply modes into an active electronic tag, a passive electronic tag, and a semi-passive electronic tag. The active electronic tag refers to the energy for the operation of the electronic tag being provided by a battery. The battery, a memory, and an antenna(s) form the active electronic tag together. Different from an activation manner of passive radio frequency, the active electronic tag continuously transmits information through a set frequency band before the battery is replaced. The passive electronic tag, also referred to as "inactive electronic tag", does not support a built-in battery. When the passive electronic tag approaches a reader, the tag is in the near field range formed by the radiation of an antenna(s) of the reader, an antenna(s) of the electronic tag generates an induced current through electromagnetic induction, and the induced current drives a chip circuit of the electronic tag. The chip circuit transmits the identification information stored in the tag to the reader through the antenna(s) of the electronic tag. The semi-passive electronic tag, also referred to as "semi-active electronic tag", inherits the advantages of small size, light weight, low price, and long service life of the passive electronic tag. When there is no reader access, the built-in battery only provides power for a few circuits in the chip, and only when there is reader access, the built-in battery powers the RFID chip, so as to increase the reading and writing distance of the tag and improve the reliability of communication.

An RFID system is a wireless communication system. The RFID system is composed of an electronic tag and a reader/writer. The electronic tag includes coupling components and chips. Each electronic tag has a unique electronic code and is placed on a measured target to mark the target object. The reader/writer can not only read information on the electronic tag, but also write the information on the electronic tag, and provide the energy needed for the electronic tag to communicate at the same time.

### I. Communication Based on Zero-Power Device

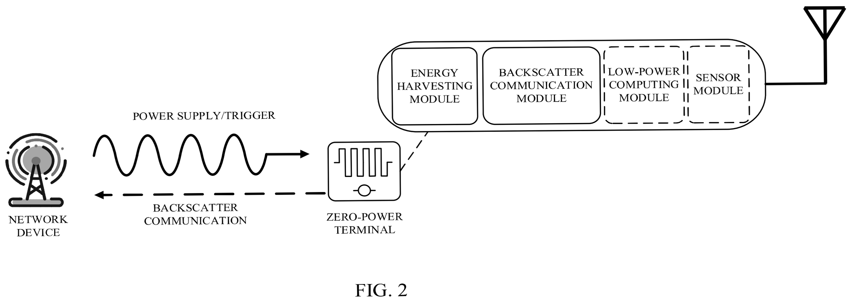

FIG. 2 is a schematic diagram of a zero-power communication system provided in the present disclosure.

As illustrated in FIG. 2, the zero-power communication system is composed of a network device and a zero-power terminal. The network device is configured to transmit wireless power-supply signals and downlink communication signals to the zero-power device and receive a backscattered signal from the zero-power terminal. A basic zero-power terminal includes an energy (power) harvesting module, a backscatter communication module, and a low-power computing module. In addition, the zero-power terminal can further include a memory or a sensor configured to store some basic information (such as object identity) or to obtain sensor data such as ambient temperature, ambient humidity, etc.

Zero-power communication may also be referred to as "communication based on zero-power terminal", and the key technologies of the zero-power communication mainly include RF energy harvesting and backscatter communication.

### 1. Energy (power) harvesting

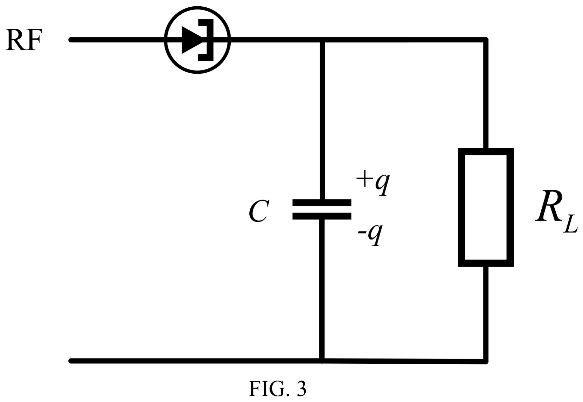

FIG. 3 is a schematic diagram illustrating energy harvesting provided in embodiments of the present disclosure.

As illustrated in FIG. 3, an energy harvesting module may include a capacitor C and a resistor *R_{L}*. The energy harvesting module is configured to harvest energy from electromagnetic waves in space based on the electromagnetic induction principle, thereby obtaining the energy required to power the zero-power terminal, such as for driving a low-power demodulation and a modulation module(s), a sensor(s), memory access, etc. As such, the zero-power terminal does not need a conventional battery. The electromagnetic induction principle means that an induced current is generated in a closed circuit as long as magnetic flux passing through the closed circuit changes. With reference to the present disclosure, the capacitor C and the resistor *R_{L}* may be configured to form a closed circuit. After receiving RF, an RF energy harvesting module may generate an induced current and store the generated induced current in the capacitor C, to harvest the energy from electromagnetic waves in space.

### 2. Backscatter communication

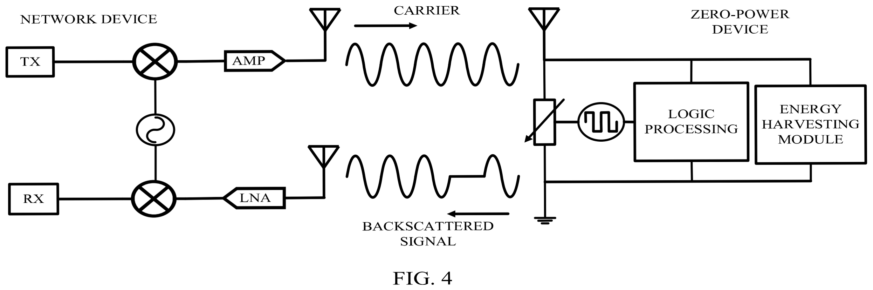

FIG. 4 is a schematic diagram illustrating backscatter communication provided in the present disclosure.

As illustrated in FIG. 4, when the network device serves as a transmitting end (TX), the network device transmits a carrier to the zero-power device by using an amplifier (AMP). Correspondingly, after receiving the carrier sent by the network device, the zero-power device drives, by using energy harvested by the energy harvesting module, a logic processing module to process information to be transmitted, loads, by using a variable resistor, the information to be transmitted on the received carrier to obtain a reflected signal, and then radiates the reflected signal via an antenna(s). This information transmission process is referred to as "backscatter communication". Correspondingly, when the network device serves as a receiving end (RX), the network device may receive, by using a low-noise amplifier (LNA), the reflected signal sent by the zero-power device. Further, in some possible embodiments, the AMP and the LNA each may be connected to one voltage display lamp, and an emergency light may be disposed between a voltage display lamp connected to the AMP and a voltage display lamp connected to the LNA.

It may be noted that, the backscatter communication illustrated in FIG. 4 is described with reference to the zero-power device and the network device. Actually, any device that has a backscatter communication function can implement the backscatter communication. The backscatter communication is closely related to load modulation. Load modulation means adjustment and control of circuit parameters of an oscillating loop in the zero-power terminal based on the rhythm of a data stream, thereby changing parameters such as an impedance and a phase of the zero-power terminal to achieve modulation. The load modulation technology mainly includes resistance-based load modulation and capacitor-based load modulation.

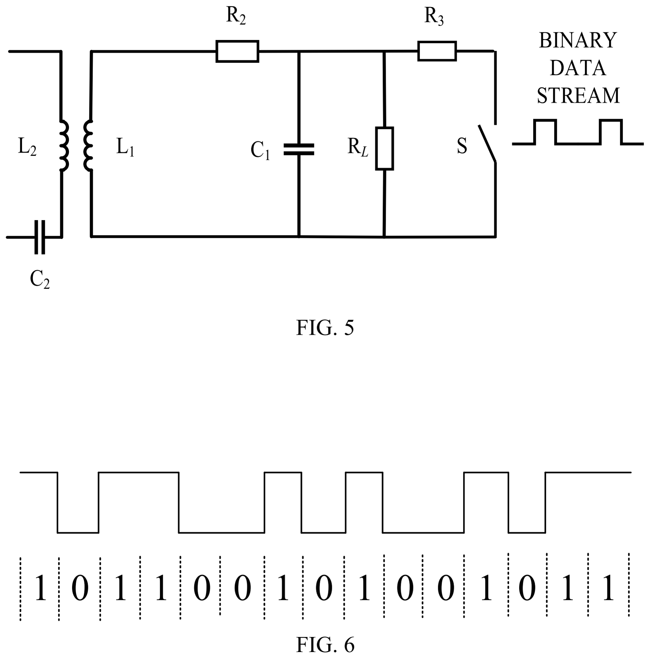

FIG. 5 is a schematic circuit diagram illustrating resistance-based load modulation provided in embodiments of the present disclosure.

As illustrated in FIG. 5, in the resistance-based load modulation, a resistor *R_{L}* is connected in parallel to a resistor *R*₃*,* and the resistor *R_{L}* may be referred to as a load modulation resistor. A branch containing the resistors *R_{L}* and the resistor *R₃* is switched on or off under the control of a switch *S.* The switch *S* can be controlled based on a binary data stream. The on/off of the branch containing the resistors *R_{L}* and the resistor *R₃* may cause a voltage change in the circuit. Further, the resistor *R_{L}* may be connected in parallel to an inductor *L₁* by means of a resistor *R₂*. The inductor *L₁* is configured to form a resonant circuit with an inductor *L₂*. Based on this, the on/off of the branch containing the resistor *R_{L}* and the resistor *R₃* may cause a voltage change in the circuit, which in turn leads to a change in the resonant frequency of the resonant circuit, thereby achieving amplitude shift keying (ASK) modulation, i.e., achieving signal modulation and transmission by adjusting the amplitude of a backscattered signal from the zero-power terminal. Further, the inductor *L₂* may be further configured to be connected to a capacitor *C₂*, and the capacitor *C*₂ may be configured to convert the change in the resonant frequency of the resonant circuit into a signal for transmission via an antenna(s). Similarly, in the capacitor-based load modulation, the on/off of a branch containing a capacitor *C*₁ and the resistor *R*₃ can achieve a change in the resonant frequency of the resonant circuit, thereby achieving frequency shift keying (FSK) modulation, i.e., achieving signal modulation and transmission by adjusting an operating frequency of the backscattered signal from the zero-power terminal.

The zero-power terminal modulates the incoming wave signal by using load modulation, thereby realizing the backscatter communication. Therefore, the zero-power terminal has significant advantages:
1. A terminal device does not actively transmit signals, and implements the backscatter communication by modulating the incoming wave signal.
2. The terminal device does not rely on a conventional active power amplification transmitter, and uses a low-power computing unit, which greatly reduces hardware complexity.
3. Battery-free communication may be implemented in combination with energy harvesting.

It may be understood that, the terminal device in the communication system 100 may be a zero-power device (e.g., a passive terminal, or even a semi-passive terminal), and the terminal device may even be a non-zero-power device, such as a common terminal, but the common terminal may perform backscatter communication in some cases.

### II. Encoding Schemes

For data to be transmitted by a zero-power terminal, various types of codes may be used to represent binary "1" and binary "0". The zero-power terminal typically uses one of the following encoding schemes: non-return-to-zero (NRZ) encoding, Manchester encoding, unipolar return-to-zero (RZ) encoding, differential binary phase (DBP) encoding, Miller coding, differential coding, etc. Simply put, different pulse signals are used to represent binary 0 and binary 1.

### 1. Non-return-to-zero (NRZ) encoding

As illustrated in FIG. 6, NRZ encoding uses a high level to represent binary "1" and a low level to represent binary "0". As illustrated in FIG. 6, the waveform has no gap between symbols, and the symbol is transmitted throughout the entire symbol time, so it is referred to as non-return-to-zero encoding.

### 2. Unipolar return-to-zero (RZ) encoding

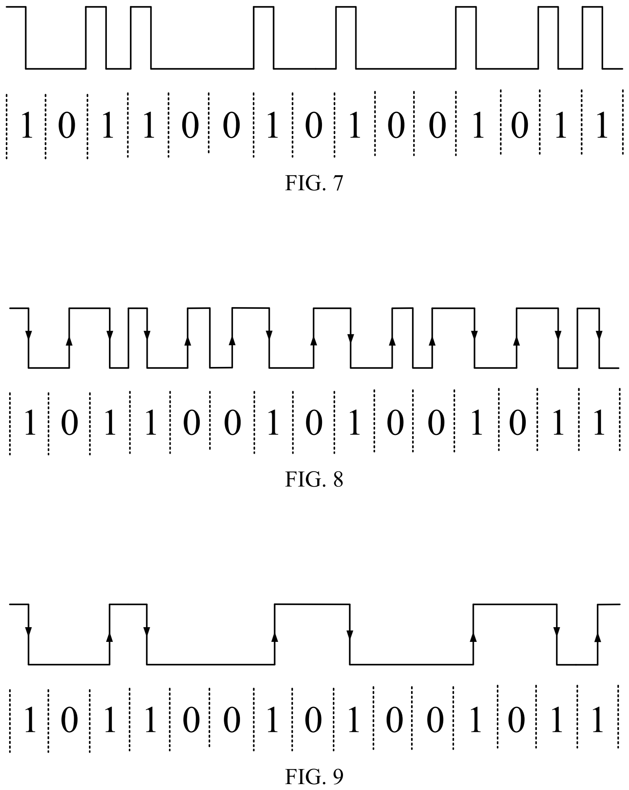

When a symbol "1" is transmitted, a positive current is emitted, but a duration of the positive current is shorter than a time width of a symbol, that is, a narrow pulse is emitted. When a symbol "0" is transmitted, no current is sent at all. FIG. 7 is an example illustrating the unipolar RZ encoding rule. Specifically, by comparing NRZ encoding and unipolar RZ coding, it can be seen that both are unipolar symbols, but the duty cycle of NRZ encoding is 100%, while the duty cycle of unipolar RZ encoding is 50%.

### 3. Manchester encoding

Manchester encoding is also referred to as "split-phase encoding" or "bi-phase code". In Manchester encoding, a phase difference of voltage transition is used to distinguish "1" and "0". Specifically, a transition from high to low represents "1", and a transition from low to high represents "0". FIG. 8 is an example illustrating the Manchester coding rule.

### 4. Miller encoding

Miller encoding is an improved version of Manchester encoding. In Miller encoding, any edge in half a bit period represents binary "1", while an unchanged level in the next bit period represents binary "0". In other words, in Miller encoding, data "1" is represented by a level transition at the center of the bit, and data "0" is represented by an unchanged level at the center of the bit. Additionally, when there are consecutive binary "0s", a level transition occurs at the end of this bit. FIG. 9 is an example illustrating the Miller encoding rule. For Miller encoding, a level change occurs at the beginning of the bit period, which makes it easier for the receiver to rebuild the bit timing.

### 5. Differential binary phase (DBP) encoding

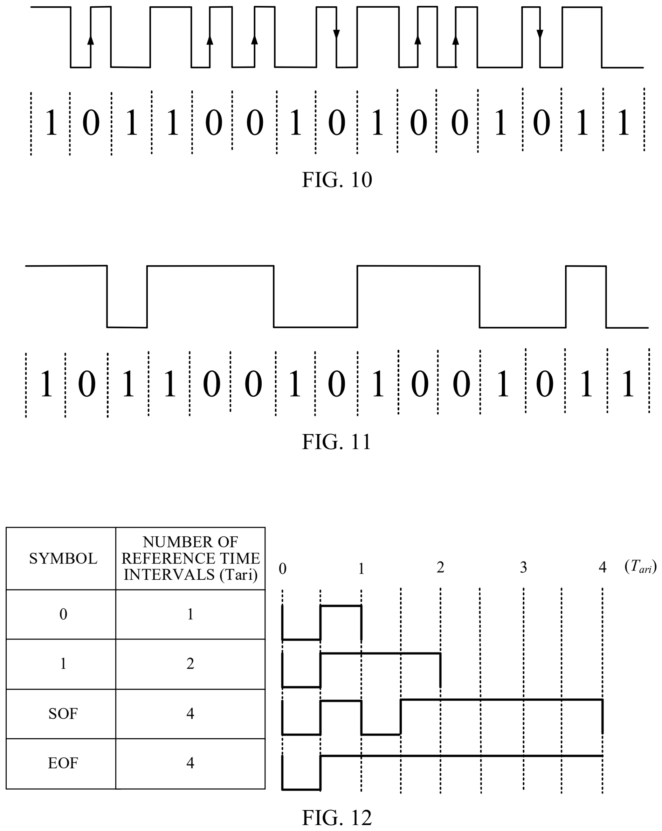

DBP encoding uses an edge in half a bit period to represent binary "0", while the absence of an edge represents binary "1". Additionally, the level is inverted at the beginning of each bit period. Therefore, it is easier for the receiver to rebuild the bit timing. FIG. 10 is an example illustrating the DBP encoding rule.

### 6. Differential encoding

For differential encoding, each binary "1" to be transmitted causes a change in the signal level, while the signal level remains unchanged for binary "0". FIG. 11 is an example illustrating the differential encoding rule.

### 7. Pulse interval encoding (PIE)

PIE is an encoding scheme used for a reader/writer to transfer data to an electronic tag. PIE encoding is an encoding scheme in which "0" has a different time interval from "1". PIE encoding is based on a consecutive fixed-interval pulse, and a repetition period of the pulse is different according to "0" and "1". Generally, a consecutive interval of each binary code is an integer multiple of a clock period. There are four PIE encoding symbols, namely, data 0, data 1, start of data frame (SOF), and end of data frame (EOF), whose encoding symbols are 1, 2, 4, and 4 times of a time interval (Tari), respectively. The definitions of data 0, data 1, SOF, and EOF are illustrated in FIG. 12. As can be seen, PIE encoding may easily define situations other than data 0 and data 1. In order to determine a type of transmitted symbol, the electronic tag needs to measure an interval of the high/low pulse transition illustrated in the figure.

### 8. Bi-phase space (FM0) encoding

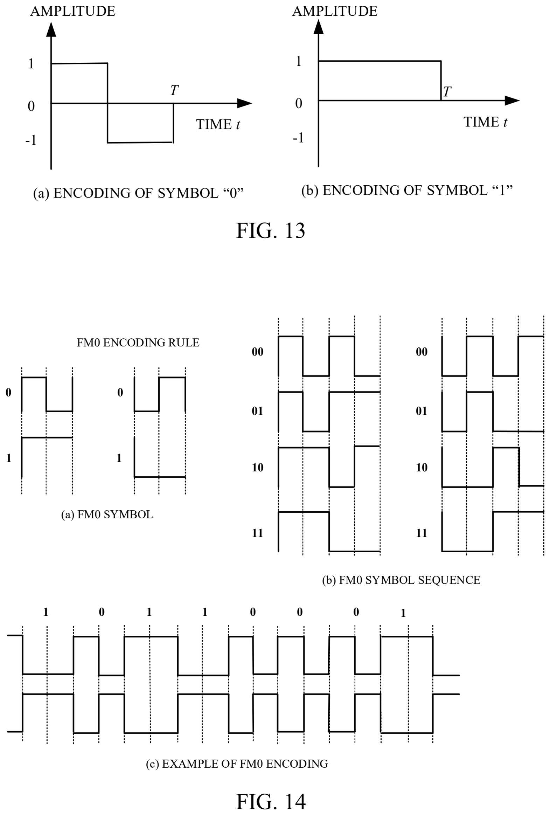

FM0 encoding is an encoding scheme used for an electronic tag to transfer data to a reader-writer. The FM0 encoding rule is that a level of a symbol "0" has level changes both in the middle and at the edge of a bit period, and a level of a symbol "1" has a level change only at the edge of a bit period. FIG. 13 is an example illustrating the FM0 encoding rule. FM0 encoding may have the following characteristics. The symbol "0" has 3 transitions, including one transition at the beginning of the bit period and one transition in the middle of the bit period. The symbol "1" has 1 transition at the beginning of the bit period. FIG. 14 is an example of an FM0 symbol, an FM0 symbol sequence, and an FM0 encoding.

### III. Application Scenarios of Zero-Power Communication

The zero-power communication, with its significant advantages of extremely low cost, zero power, and small size, can be widely applied in various industries, such as logistics, smart warehousing, smart agriculture, energy power, industrial internet, and other vertical industries, and can also be applied in personal applications such as smart wearables and smart homes.

### IV. Power-Supply Signal and Trigger Signal in Zero-Power Communication System

A Zero-power terminal can harvest energy based on a power-supply signal.

Exemplarily, in terms of a carrier of the power-supply signal, the power-supply signal may be from a base station, a smart phone, an intelligent gateway, a charging station, a micro base station, etc. In terms of frequency band, the power-supply signal may be a low-frequency signal, a medium-frequency signal, a high-frequency signal, etc. In terms of waveform, the power-supply signal may be a sine wave, a square wave, a triangular wave, a pulse, a rectangular wave, etc. The power-supply signal may be a continuous wave, or may be a discontinuous wave (i.e., time interruption is allowed). The power-supply signal may be a signal specified in the 3^{rd}-generation partnership project (3GPP) standard, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), etc.

It may be noted that, since the carrier signal sent by the network device may also be used to provide energy to the zero-power device, the carrier signal may also be referred to as "power-supply signal".

The zero-power terminal can perform backscatter communication based on a received trigger signal.

Exemplarily, the trigger signal can be used to schedule or trigger the zero-power terminal to perform backscatter communication. The trigger signal carries scheduling information of the network device, or the trigger signal is a scheduling signal or a scheduling signal sent by the network device. In terms of a carrier of the trigger signal, the trigger signal may be from a base station, a smart phone, an intelligent gateway, etc. In terms of frequency band, the trigger signal may be a low-frequency signal, a medium-frequency signal, a high-frequency signal, etc. In terms of waveform, the trigger signal may be a sine wave, a square wave, a triangular wave, a pulse, a rectangular wave, etc. The trigger signal may be a continuous wave, or may be a discontinuous wave (i.e., time interruption is allowed). The trigger signal may be a signal specified in the 3GPP standard, such as an SRS, a PUSCH, a PRACH, a PUCCH, a PDCCH, a PDSCH, a PBCH, or may be a new signal.

It may be noted that, the power-supply signal and the trigger signal may be the same signal, or may be two independent signals, which is not limited in the present disclosure.

For example, in a cellular network, since a zero-power device has no battery to supply power, a network device needs to provide the power-supply signal that is used for the zero-power device to obtain energy, to perform a corresponding communication process. A signal for supplying energy (that is, the power-supply signal) and a signal for transmitting information (that is, the trigger signal) may be two signals or may be the same signal. For another example, in the RFID technology, the power-supply signal and the trigger signal may be the same signal, and in the cellular passive IoT technology, the power-supply signal and the trigger signal may be two independent signals. The two signals may not be sent in one frequency band. For example, the network device sends a power-supply signal consecutively or intermittently in a certain frequency band, and after the zero-power device harvests and obtains energy from the power-supply signal, the zero-power device can perform a corresponding communication process, such as measurement, channel/signal reception, channel/signal transmission, etc.

### V. Classifications of Zero-Power Terminal

Based on the energy source and usage of the zero-power terminal, the zero-power terminal can be divided into the following types.

### 1. Passive zero-power terminal

For a zero-power device, a built-in battery is not needed. When a zero-power device moves close to a network device (e.g., a reader/writer in the RFID system), the zero-power device is within a near-field of the radiation of an antenna(s) of the network device. In this case, an antenna(s) of the zero-power device generates an induced current through electromagnetic induction, and the induced current drives a low-power chip circuit of the zero-power device to perform demodulation of a forward-link (downlink, a link from the network device to the zero-power device) signal and modulation of a backward-link (uplink, a link from the zero-power device to the network device, also referred to as "backscatter-link") signal. For the backscatter link, the zero-power device performs signal transmission through backscattering.

It can be seen that, neither the forward link nor the backward link of the passive zero-power device requires a built-in battery to drive, which is a truly zero-power terminal.

The passive zero-power device does not need a battery and has a simple RF circuit and a simple baseband circuit. For example, the passive zero-power device does not need components such as an LNA, a power amplifier (PA), a crystal oscillator, an analog-to-digital converter (ADC), etc., and thus has advantages such as small size, light weight, low price, and long service life.

The passive zero-power device can also support other manners for energy harvesting, and obtain energy for a drive circuit by harvesting energy from the environment (e.g., light energy, thermal energy, kinetic energy, mechanical energy, etc.), to support communication of a terminal device.

### 2. Semi-passive zero-power device

A semi-passive zero-power device is not equipped with a conventional battery, but can use an RF energy harvesting module to harvest radio wave energy or use the energy harvesting module to harvest energy from the environment (such as solar energy, thermal energy, mechanical vibration energy, etc.), and store the harvested energy in a power storage unit (e.g., a capacitor). After the power storage unit obtains energy, a low-power chip circuit of the zero-power device can be driven to perform demodulation of a forward-link signal and modulation of a backward-link signal. For a backscatter link, the zero-power device performs signal transmission through backscattering.

It can be seen that neither the forward link nor the backward link of the semi-passive zero-power terminal requires a built-in battery to drive. Although the semi-passive zero-power device utilizes energy stored in the capacitor during operation, since the energy comes from radio wave energy harvested by the energy harvesting module, the semi-passive zero-power device is truly a zero-power device.

The semi-passive zero-power device inherits many advantages of the passive zero-power device, and thus has advantages such as small size, light weight, low price, long service life, etc.

### 3. Active zero-power device

A zero-power device applied in some scenarios can also be an active zero-power device, and such a device can have a built-in battery (a conventional battery, such as a dry battery, a rechargeable lithium battery, etc.). The battery is used to drive a low-power chip circuit of the zero-power device to perform demodulation of a forward-link signal and modulation of a backward-link signal. However, for a backscatter link, the zero-power device performs signal transmission through backscattering. Therefore, the zero-power consumption of such a device mainly lies in that signal transmission on the backward link does not require power from the terminal itself but is based on backscattering. Although the active zero-power device uses a battery, the active zero-power device has an extremely low power consumption due to the adoption of an ultra-low power communication technology. As a result, a service life of the battery can be greatly prolonged compared to existing technologies.

The built-in battery of the active zero-power terminal powers an RFID circuit to increase a reading and writing range of a tag, thereby improving the reliability of communication. Therefore, the active zero-power terminal can be applied in some scenarios with high requirements on communication distance, reading delay, and other aspects.

Some zero-power terminals, such as a semi-passive zero-power terminal or an active zero-power terminal, may have the ability to actively transmit, that is, in addition to communication through backscattering in the backward link, the zero-power terminals can also communicate through active transmission.

In addition, the types of services for the zero-power terminals will also primarily focus on industry-specific applications, similar to other IoT service types. Therefore, the zero-power terminals can be classified based on the transmitter type. The zero-power terminals can be classified into the following types based on the transmitter type.

### 1. Backscatter-based zero-power device

Such a zero-power device performs uplink data transmission through backscattering. The zero-power device does not have an active transmitter for active transmission, but has only a backscattering transmitter. Therefore, if data transmission is to be performed, the zero-power device needs to be provided with a carrier wave from the network device, and then performs backscattering based on the carrier wave, thereby implementing data transmission.

### 2. Active transmitter-based zero-power device

Such a zero-power device performs uplink data transmission by using an active transmitter capable of active transmission. Therefore, when performing data transmission, the zero-power device can transmit data by using the active transmitter of the zero-power device itself without requiring the network device to provide a carrier wave. An active transmitter applicable to the zero-power device can be, for example, an ultra-low-power ASK transmitter, an ultra-low-power FSK transmitter, etc. Based on current achievement, for the case of transmitting a signal of 100 microwatts (µw) by such a transmitter, overall power consumption can be decreased to 400~600 µw.

### 3. Zero-power device having both a backscattering transmitter and an active transmitter

Such a terminal can support both a backscattering transmitter and an active transmitter. The terminal can determine, according to different conditions (such as electric quantity and available ambient power source) or based on scheduling by a network device, which signal transmission scheme is to be applied, that is, whether to use a backscattering transmitter or use an active transmitter to perform signal transmission.

### VI. Cellular Passive Internet of Things (IoT)

Cellular IoT is booming, for example, the 3GPP has standardized narrow band internet of things (NB-IoT), MTC, reduced capability (RedCap), and other IoT technologies. However, the related art is no longer able to meet the IoT communication requirements in many scenarios. The main reasons are as follows.

### 1. Harsh communication environments

In some IoT scenarios, extreme environments such as high temperature, extremely low temperature, high humidity, high pressure, high radiation, or high-speed motion may be encountered. Examples include ultra-high voltage substations, high-speed train tracks, cold regions, industrial production lines, etc. In these scenarios, due to limitations of the operating environment of conventional power supplies, existing IoT terminals cannot operate. Moreover, extreme environments are also unfavorable for IoT maintenance, such as battery replacement.

### 2. Extremely small terminal form requirements

Some IoT communication scenarios, such as food traceability, goods circulation, and smart wearables, require terminals to be extremely small in size for convenient use in such scenarios. For example, IoT terminals used for goods management in circulation are often implemented as electronic tags, which are embedded in product packaging in a very compact form. Another example is lightweight wearable devices, which can improve the user experience while meeting user needs.

### 3. Extremely low-cost IoT communication requirements

Many IoT communication scenarios require a sufficiently low cost of IoT terminals to improve competitiveness compared with other alternative technologies. For example, in logistics or warehousing scenarios, to facilitate the management of a large number of circulating items, IoT terminals can be attached to each item, and communication between the terminal and the logistics network can achieve precise management throughout the entire logistics process and life cycle. These scenarios require the price of the IoT terminals to be sufficiently competitive.

Therefore, to cover these unmet IoT communication needs, the cellular network also needs to develop ultra-low-cost, ultra-small, battery-free/maintenance-free IoT, and the zero-power IoT can precisely meet this demand.

It may be additionally noted that, the zero-power IoT can also be referred to as an ambient power-enabled (AMP) IoT, or ambient IoT for short. Specifically, an ambient IoT device can refer to an IoT device that utilizes various ambient energy, such as RF energy, light energy, solar energy, thermal energy, mechanical energy, etc. The ambient IoT device may have no energy storage capability, or may have very limited energy storage capability (such as use of a capacitor with a capacity of tens of microfarads (µF)).

The ambient IoT can be at least used in the following four types of scenarios:
1. Object recognition, such as logistics, management of products in a product line, and management of a supply chain;
2. Environmental monitoring, such as monitoring of working environment, temperature and humidity of natural environment, and toxic gases;
3. Positioning, such as indoor positioning, intelligent object search, and positioning of products in a product line;
4. Intelligent control, such as intelligent control of various electrical appliances (switching on/off of an air conditioner and temperature adjustment) in a smart home, and intelligent control of various facilities (automatic pouring and fertilization) in an agricultural greenhouse.

In summary, the zero-power device is low in complexity and cost, maintenance-free, and battery-free. The zero-power device can be classified into the passive zero-power terminal, the semi-passive zero-power terminal, the active zero-power terminal, etc. The energy for communication is obtained by harvesting the energy from the environment (e.g., RF energy, light energy, thermal energy, mechanical energy, kinetic energy, etc.). In terms of communication manner, the zero-power device can support backscattering, or can further support active transmission. In addition, the zero-power device can realize large-density and large-scale deployment at a relatively low cost. In addition, due to advantages such as maintenance-free and battery-free, the zero-power device has great potential for application in industrial sensing networks, smart home, smart agriculture, logistics and warehousing, smart wearing, healthcare, etc. The zero-power device can be combined with a sensor to perform environmental monitoring, danger warning, alarm, etc.

### VII. Repetition Code

In general, noise or interference inevitably exists in communication channels, such that information loss is bound to occur during information transmission process. In other words, distortion occurs in transmission of a source symbol in a noisy channel. To reduce such information loss, effective channel encoding is required before the source symbol is input into the channel.

Channel encoding can reduce the probability of errors occurring during transmission, thereby improving the reliability of the communication system. A basic idea of channel encoding is to add redundant information that can be used at the receiving end for error detection or error correction. Different encoding schemes have varying capabilities for error detection and correction.

Repetition code is a very simple channel encoding scheme. Essentially, with repetition code, each symbol to be sent is sent repeatedly. In other words, each original source symbol is encoded into multiple identical symbols each with the same value as the original symbol. For example, (3,1) binary repetition code is obtained by an encoding scheme in which each bit in an original binary sequence is repeated 3 times, that is, "0" is encoded as "000", and "1" is encoded as "111".

In a corresponding decoding process, a more frequent bit, either "0" or "1", in a received codeword can be selected as a decoding result. For example, in the decoding of the (3,1) binary repetition code, received "000", "001", "010", and "100" are each decoded as "0", while received "011", "101", "110", and "111" are each decoded as "1". In this way, for each codeword, any bit error that occurs during transmission can be automatically corrected through decoding.

### VIII. Modulation Schemes for Zero-Power Communication

When a zero-power device communicates with a network device through either backscattering or active transmission, the zero-power device does not generate a carrier, but backscatters through modulation of an incoming wave using modulation schemes such as on-off Keying (OOK), ASK, phase shift keying (PSK), FSK, etc., and thus the data transmission performance is relatively poor. Similarly, for a zero-power device that supports communication through active transmission, due to simple structure and focus on low-power communication, the zero-power device also typically uses modulation schemes such as OOK, ASK, PSK, FSK, etc. for signal transmission. However, the signal transmission power is usually at a low level, resulting in poor data transmission performance as well.

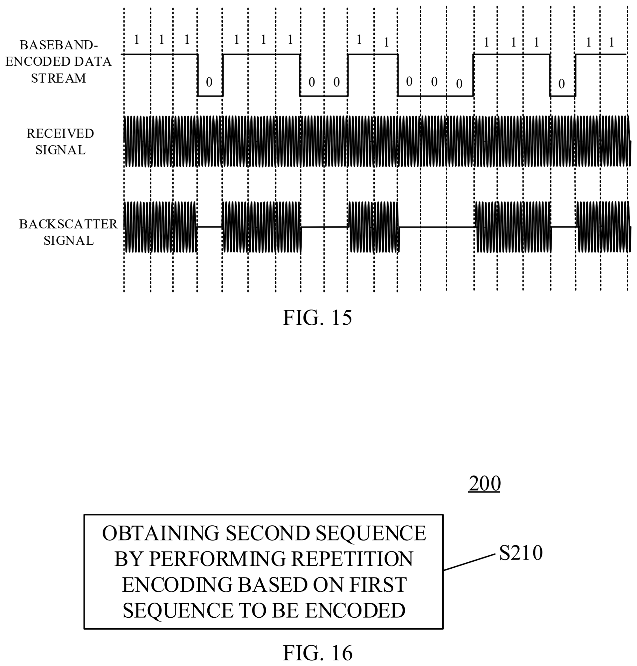

FIG. 15 is a schematic diagram illustrating an OOK modulation scheme provided in embodiments of the present disclosure.

As illustrated in FIG. 15, for the OOK modulation scheme, a zero-power device modulates an encoded baseband-encoded data stream onto a signal received by the zero-power device, to obtain a reflected signal, and sends the reflected signal to a network device. The signal received by the zero-power device may be a high-frequency signal or a specific carrier signal.

It may be noted that, the zero-power device (or referred to as "ambient IoT device") has a simple structure, low complexity, and low cost, and can support energy harvesting from the environment (e.g., light energy, thermal energy, RF energy, mechanical energy, kinetic energy, etc.) to obtain the energy needed for communication. The zero-power device may be a device that supports at least one of the following communication modes: communication through backscattering or communication through active transmission.

However, due to the characteristics of the zero-power device, the zero-power device does not use a complex modulation scheme during communication. When the zero-power device transmits signals to the network device, with either backscattering or active transmission, the data transmission performance is generally inferior to that of a device in the existing NR system. Without channel encoding, errors in data bits in a transmitted packet can lead to data transmission failure and the need for data retransmission. For the zero-power device, it is essential to enhance data transmission performance and minimize the number of data retransmissions. In light of this, the present disclosure provides a wireless communication method and a zero-power device, which can enhance the data transmission performance of the zero-power device.

Specifically, in the present disclosure, repetition encoding is performed on a first sequence to be encoded, bits in the first sequence, a sequence obtained by sequence mapping on the first sequence, and bits in the sequence obtained by sequence mapping on the first sequence, which can enhance the data transmission performance of the zero-power device. Optionally, the repetition encoding can support different numbers of repetitions. The number of repetitions used for the repetition encoding can be selected from multiple numbers of repetitions that can be configured by the network device and adapted to different scenarios, thereby balancing error probability and data rate during data transmission. Optionally, the first sequence can also be a bit sequence added with a parity bit(s) and/or a cyclic redundancy check (CRC) bit(s), such that a receiving device can perform error detection and error correction on the received data, thereby further enhancing the data transmission performance of the zero-power device. Optionally, processing such as interleaving and/or first encoding is introduced for a second sequence, thereby further enhancing the data transmission performance of the zero-power device.

FIG. 16 is a schematic flowchart of a wireless communication method 200 provided in embodiments of the present disclosure.

It may be noted that, the wireless communication method 200 can be performed by a sending device, and the sending device may be a network device or a terminal device. In other words, the wireless communication method is applied to wireless communication between the sending device and a receiving device (including at least one of: the terminal device sending data to the network device, the network device sending data to the terminal device, or the terminal device sending data to the terminal device). For example, the terminal device may be a zero-power device, and the zero-power device may be a device that supports at least one of the following communication modes: communication through backscattering or communication through active transmission. For example, the zero-power device may be a conventional NR terminal loaded with or integrated with a backscatter communication module. For ease of description, the method 200 is described below with an example that the method is performed by the zero-power device.

As illustrated in FIG. 16, the wireless communication method 200 can include the following.

At S210, the zero-power device obtains a second sequence by performing repetition encoding based on a first sequence to be encoded.

Exemplarily, the first sequence may include a data bit sequence.

The data bit sequence may be communication data sent by the zero-power device to the network device, or may be communication data sent by the zero-power device to another terminal device.

The first sequence may further include other information, which is not limited in the present disclosure.

For example, the first sequence may further include information used for checking the data bit sequence. The information used for checking the data bit sequence includes, but is not limited to, a CRC bit and a parity bit. The information used for checking the data bit sequence may be information used for checking all of the data bit sequence, or may include information used for checking multiple portions of the data bit sequence, respectively.

For another example, the first sequence may further include a cyclic prefix, and the cyclic prefix is used for the receiving device to identify or position a starting position of the data bit sequence when receiving the data bit sequence.

In this embodiment, the zero-power device obtains the second sequence by performing repetition encoding based on the first sequence to be encoded. In other words, redundant information is added by repetition encoding based on the first sequence, such that the receiving end can perform error correction and error detection on a decoded result of the first sequence when decoding the first sequence based on the second sequence, thereby enhancing the data transmission performance of the zero-power device.

It may be noted that, the zero-power device has a simple structure, low complexity, and low cost, and can support energy harvesting from the environment (e.g., light energy, thermal energy, RF energy, mechanical energy, kinetic energy, etc.) to obtain the energy needed for communication. The zero-power device may be a device that supports at least one of the following communication modes: communication through backscattering or communication through active transmission. Without channel encoding, errors in data bits in a transmitted packet can lead to data transmission failure and the need for data retransmission. For the zero-power device, it is essential to enhance data transmission performance and minimize the number of data retransmissions. In light of this, an encoding process of the repetition encoding is simple and has low complexity, with which the data transmission performance of the zero-power device can be enhanced as much as possible without increasing the complexity of the zero-power device.

In addition, the zero-power device can also be referred to as "AMP IoT device" or "ambient IoT device". Specifically, the ambient IoT device can refer to an IoT device that utilizes various ambient energy, such as RF energy, light energy, solar energy, thermal energy, mechanical energy, etc. The ambient IoT device may have no energy storage capability, or may have very limited energy storage capability (such as use of a capacitor with a capacity of tens of µF).

In some embodiments, the operations at S210 can include the following. The zero-power device obtains the second sequence by performing repetition encoding on values of bits in the first sequence.

Exemplarily, the zero-power device can obtain the second sequence by performing repetition encoding on the values of the bits in the first sequence based on the number of repetitions (may also be referred to as "redundancy") of the repetition encoding.

Exemplarily, assuming that the number of repetitions of the repetition encoding is *N,* then the zero-power device can perform repetition encoding on the values of the bits in the first sequence according to Table 1:

**Table 1**

| Repetition encoding | |
|---|---|
| Bits in the first sequence | Bits in the second sequence |
| 0 | 00...00 (*N* 0s) |
| 1 | 11...11 *(N* 1s) |

As illustrated in Table 1, the zero-power device encodes the bits in the first sequence according to the redundancy *N,* i.e., each bit is repeated *N* times, where "0" is encoded as *N* "0s", and "1" is encoded as *N* "1s".

For example, assuming that the first sequence is "011" and *N=5,* then the second sequence is "000001111111111".

For the receiving device, the receiving device can decode according to the number of "0s" and "1s" in each codeword (e.g., *N* bits obtained by performing repetition encoding on one bit in the first sequence). For example, the receiving device obtains the bits in the first sequence by decoding every five consecutive bits in a second sequence to be decoded. Typically, the idea of "majority rule" can be adopted, and a value with the highest frequency is taken as a decoded result of the codeword. Assuming that the *N* bits in each codeword include *N*1 "1s" and *N2* "0s", where *N=N*1+*N*2*,* then: if *N*1>*N*2*,* the codeword is decoded as a "1"; if *N*1 *<N2,* the codeword is decoded as "0"; and if *N1=N2,* the codeword may be determined as "1" or "0" according to a preset rule. Further, if *N1=N2,* the codeword may be determined based on other information, such as the CRC bit or the parity bit. For example, the receiving device may determine the codeword based on the parity bit in the case of *N*1*=N*2*.* Specifically, assuming that *N*1*=N*2 in a first codeword, then the receiving device can determine a decoded result of the first codeword based on a decoded codeword(s) used for generating the parity bit and a value of the parity code. For another example, the receiving device may determine the codeword based on the CRC bit in the case of *N*1*=N*2*.* Specifically, assuming that *N*1*=N*2 in the first codeword, then the receiving device can determine the decoded result of the first codeword based on a decoded codeword(s) used for generating the CRC bit and a value of the CRC bit.

In this embodiment, when the zero-power device performs repetition encoding on the values of the bits in the first sequence, the receiving device has a bit-level error correction capability, i.e., when there is an error in a repetition code corresponding to a bit, the receiving device is able to correctly determine an original bit corresponding to the codeword, thereby enhancing the data transmission performance of the zero-power device.

In some embodiments, the operations at S210 can include the following. The zero-power device obtains the second sequence by performing repetition encoding on the first sequence.

Exemplarily, the zero-power device can obtain the second sequence by performing repetition encoding on the first sequence based on the number of repetitions of the repetition encoding.

Exemplarily, assuming that the number of repetitions (may also be referred to as "redundancy") of the repetition encoding is *N,* then the zero-power device can obtain a second sequence formed by *N* consecutive first sequences by performing repetition encoding on the first sequence.

For example, assuming the first sequence is "011" and *N*=5, then the second sequence is "011011011011011".

For the receiving device, the receiving device can decode according to the number of "0s" and "1s" in each codeword (e.g., *N* bits obtained by performing repetition encoding on one bit in the first sequence). For example, for a second sequence to be decoded, the receiving device can divide the second sequence into five "011"s based on the number of repetitions, and then decode the first bit (i.e., "0") in the first sequence based on the first bits (i.e., five "0s") in the five "011"s. Typically, the receiving device can adopt the idea of "majority rule" and takes a value with the highest frequency as a decoded result of the codeword. Assuming that the *N* bits in each codeword include *N*1 "1s" and *N2* "0s", where *N=N*1+*N*2*,* then: if *N*1> *N2,* the codeword is decoded as a "1"; if *N*1 *<N2,* the codeword is decoded as "0"; and if *N1=N2,* the codeword may be determined as "1" or "0" according to a preset rule. Further, if *N1=N2,* the codeword may be determined based on other information, such as the CRC bit or the parity bit. For example, the receiving device may determine the codeword based on the parity bit in the case of *N1=N2.* Specifically, assuming that *N*1*=N*2 in a first codeword, then the receiving device can determine a decoded result of the first codeword based on a decoded codeword(s) used for generating the parity bit and a value of the parity code. For another example, the receiving device may determine the codeword based on the CRC bit in the case of *N1=N2.* Specifically, assuming that *N*1*=N*2 in the first codeword, then the receiving device can determine the decoded result of the first codeword based on a decoded codeword(s) used for generating the CRC bit and a value of the CRC bit.

In this embodiment, when the zero-power device performs repetition encoding on the first sequence, the receiving device has the bit-level error correction capability, i.e., when there is an error in a repetition code corresponding to a bit, the receiving device is able to correctly determine an original bit corresponding to the codeword, thereby enhancing the data transmission performance of the zero-power device.

In some embodiments, when the number of bits in the first sequence is *K* and the number of repetitions of the repetition encoding is *N,* the number of bits in the second sequence is *N*×*K*, where *N* and *K* each are a positive integer.

Exemplarily, when the zero-power device performs repetition encoding on the bits in the first sequence, if the number of bits in the first sequence is *K* and the number of repetitions of the repetition encoding is *N,* the number of bits in the second sequence is *N*×*K*. Alternatively, when the zero-power device performs repetition encoding on the first sequence, if the number of bits in the first sequence is *K* and the number of repetitions of the repetition encoding is *N,* the number of bits in the second sequence is *N*×*K.*

In some embodiments, the operations at S210 can include the following. The zero-power device determines at least one third sequence based on the first sequence. The zero-power device obtains the second sequence by performing repetition encoding based on the at least one third sequence.

Exemplarily, when the zero-power device performs repetition encoding based on the first sequence, the zero-power device can first map the first sequence to the at least one third sequence, and then obtain the second sequence by performing repetition encoding based on the at least one third sequence.

In some embodiments, the zero-power device determines the third sequence based on the values of the bits in the first sequence.

Exemplarily, the zero-power device first obtains the at least one third sequence by sequence mapping on a value of each bit in the first sequence, and then obtains the second sequence by performing repetition encoding based on a sequence formed by the at least one third sequence.

In some embodiments, the zero-power device obtains a first mapping relationship, where the first mapping relationship includes a correspondence between a first value and a first candidate sequence and a correspondence between a second value and a second candidate sequence. When a value of a first bit in the first sequence is the first value, the first candidate sequence is determined as the third sequence. When the value of the first bit is the second value, the second candidate sequence is determined as the third sequence.

Exemplarily, the first value is 0, and the second value is 1.

In other words, the zero-power device obtains the first mapping relationship, where the first mapping relationship includes a correspondence between 0 and the first candidate sequence and a correspondence between 1 and the second candidate sequence. When the value of the first bit in the first sequence is 0, the first candidate sequence is determined as the third sequence. When the value of the first bit is 1, the second candidate sequence is determined as the third sequence.

Exemplarily, the first value is 1, and the second value is 0.

In other words, the zero-power device obtains the first mapping relationship, where the first mapping relationship includes a correspondence between 1 and the first candidate sequence and a correspondence between 0 and the second candidate sequence. When the value of the first bit in the first sequence is 1, the first candidate sequence is determined as the third sequence. When the value of the first bit is 0, the second candidate sequence is determined as the third sequence.

Exemplarily, the first mapping relationship may be configured by a network device, may be predefined, may be determined by the zero-power device, or may be negotiated between the zero-power device and the network device. The first mapping relationship may also be a mapping relationship determined by the zero-power device from multiple mapping relationships configured by the network device or multiple predefined mapping relationships. For example, the first mapping relationship may be a mapping relationship matched with the number of bits in the first sequence (or the type of information of the first sequence, etc.) among the multiple mapping relationships. The type of information of the first sequence includes, but is not limited to, a data type, a control type, etc.

In some embodiments, the first candidate sequence and the second candidate sequence have different values at the same bit position.

Exemplarily, the first candidate sequence and the second candidate sequence have different values at each bit position.

Exemplarily, the number of bits in the first candidate sequence and the number of bits in the second candidate sequence each are greater than or equal to 2.

Exemplarily, the number of bits in the first candidate sequence and the number of bits in the second candidate sequence each may be 2, and the first candidate sequence and the second candidate sequence have different values at each of the first bit position and the second bit position.

For example, the first mapping relationship may be a mapping relationship as illustrated in Table 2 below:

**Table 2**

| Sequence mapping | |
|---|---|
| Bits in the first sequence | Third sequences |
| 1 | 10 |
| 0 | 01 |

As illustrated in Table 2, the zero-power device performs sequence mapping on the bits in the first sequence according to Table 2, i.e., "1" is mapped to "10", and "0" is mapped to "01".

Exemplarily, the number of bits in the first candidate sequence and the number of bits in the second candidate sequence each may be 4, and the first candidate sequence and the second candidate sequence have different values at each of the first bit position, the second bit position, the third bit position, and the fourth bit position.

For example, the first mapping relationship may be a mapping relationship as illustrated in Table 3 below:

**Table 3**

| Sequence mapping | |
|---|---|
| Bits in the first sequence | Third sequences |
| 1 | 1001 |
| 0 | 0110 |

As illustrated in Table 3, the zero-power device performs sequence mapping on the bits in the first sequence according to Table 3, i.e., "1" is mapped to "1001", and "0" is mapped to "0110".

For example, the first mapping relationship may be the mapping relationship illustrated in Table 4 below:

**Table 4**

| Sequence mapping | |
|---|---|
| Bits in the first sequence | Third sequences |
| 1 | 1110 |
| 0 | 0001 |

As illustrated in Table 4, the zero-power device performs sequence mapping on the bits in the first sequence according to Table 2, i.e., "1" is mapped to "1110", and "0" is mapped to "0001".

Table 2 to Table 4 are only examples in the present disclosure and shall not be construed as a limitation to the present disclosure. For example, in other alternative embodiments, the third sequence may also be a sequence with other bit lengths or a sequence with other values. For example, when the number of bits in the first candidate sequence and the number of bits in the second candidate sequence each are 3, there can be a variety of possible cases for the first candidate sequence and the second candidate sequence. For example, if the first candidate sequence is 001, the second candidate sequence is 110. For another example, the first candidate sequence is 010, and the second candidate sequence is 101. For another example, the first candidate sequence is 100, and the second candidate sequence is 011. For another example, the first candidate sequence is 011, and the second candidate sequence is 100. For another example, the first candidate sequence is 101, and the second candidate sequence is 010. For another example, the first candidate sequence is 110, and the second candidate sequence is 001. For another example, the first candidate sequence is 000, and the second candidate sequence is 111. For another example, the first candidate sequence is 111, and the second candidate sequence is 000.

For repetition encoding, assume that the first mapping relationship is the mapping relationship illustrated in Table 2. For example, if the first sequence is "0110", when the zero-power device performs repetition encoding based on the first sequence to be encoded, the zero-power device can first obtain at least one third sequence by mapping "0" in the first sequence to "01" and mapping "1" in the first sequence to "10", i.e., the at least one third sequence includes the first "01", the first "10", the second "10", and the second "01", and then can obtain a second sequence by performing repetition encoding based on a sequence formed by the at least one third sequence (i.e., a sequence formed by the first "01", the first "10", the second "10", and the second "01", i.e., "01 10 10 01"), i.e., performing repetition encoding based on "01 10 10 01".

In some embodiments, the zero-power device first divides the first sequence into at least one encoding group, and then determines the third sequence based on a value of each of the at least one encoding group.

Exemplarily, each of the at least one encoding group includes one bit or multiple consecutive bits.

In other words, the zero-power device takes every bit or every multiple consecutive bits in the first sequence as one encoding group, obtains at least one third sequence by sequence mapping on the encoding group, and then obtains a second sequence by performing repetition encoding based on a sequence formed by the at least one third sequence.

In some embodiments, the zero-power device first obtains a second mapping relationship, where the second mapping relationship includes a correspondence between multiple values and multiple candidate sequences, and the multiple values include the value of each of the at least one encoding group. Then, the zero-power device determines a candidate sequence corresponding to the value of each of the at least one encoding group as the third sequence.

Exemplarily, each of the multiple values can include a value of one bit or a value of multiple consecutive bits.

Exemplarily, the second mapping relationship may be configured by the network device, may be predefined, may be determined by the zero-power device, or may be negotiated between the zero-power device and the network device. The second mapping relationship may also be a mapping relationship determined by the zero-power device from the multiple mapping relationships configured by the network device or the multiple predefined mapping relationships. For example, the second mapping relationship may be a mapping relationship matched with the number of bits in the first sequence (or the type of the information of the first sequence, etc.) among the multiple mapping relationships. The type of information of the first sequence includes, but is not limited to, a data type, a control type, etc.

In some embodiments, the number of the multiple candidate sequences is positively correlated with the number of bits of each of the multiple values.

Exemplarily, a greater number of bits of each of the multiple values leads to more candidate sequences. In other words, a smaller number of bits of each of the multiple values leads to less multiple candidate sequences.

Exemplarily, assuming that the number of bits of each of the multiple values is *P,* then the number of the multiple candidate sequences is 2*^{P}*, where *P* is a positive integer.

Exemplarily, assuming that the number of bits of each of the multiple values is 2, then the number of bits in each of the multiple candidate sequences can be 4.

For example, the second mapping relationship may be the mapping relationship illustrated in Table 5 below:

**Table 5**

| Sequence mapping | |
|---|---|
| Values | Candidate sequences |
| 00 | 0101 |
| 01 | 0110 |
| 10 | 1001 |
| 11 | 1010 |

As illustrated in Table 5, the zero-power device divides the bits in the first sequence into at least one encoding group according to Table 5, each encoding group having 2 bits, and performs sequence mapping on each encoding group based on Table 5, i.e., "00" is mapped to "0101", "01" is mapped to "0110", "10" is mapped to "1001", and "11" is mapped to "1010".

Table 5 is only an example in the present disclosure and shall not be construed as a limitation to the present disclosure. For example, in other alternative embodiments, the candidate sequence may also be a sequence with other bit lengths or a sequence with other values. For example, a 2-bit encoding group can be mapped to a 3-bit third sequence.

For repetition encoding, assume that the first mapping relationship is the mapping relationship illustrated in Table 5. When the zero-power device performs repetition encoding based on the first sequence to be encoded, the zero-power device can first divide the first sequence into at least one encoding group, and obtains at least one third sequence by mapping an encoding group with the value of "00" to "0101", mapping an encoding group with the value of "01" to "0110", mapping an encoding group with the value of "10" to "1001", and mapping an encoding group with the value of "11" to "1010". For example, if the first sequence is "0110", the zero-power device divides "0110" into two encoding groups, i.e., "01" and "10", obtains at least one third sequence including "0110" and "1001" by sequence mapping on "01" and " 10", and then can obtain a second sequence by performing repetition encoding based on a sequence formed by the at least one third sequence (i.e., a sequence formed by "0110" and "1001", i.e., "0110 1001"), i.e., performing repetition encoding based on "0110 1001".

In some embodiments, the zero-power device obtains the second sequence by performing repetition encoding on values of bits in the third sequence.

Exemplarily, the zero-power device can obtain the second sequence by performing repetition encoding on values of bits in the sequence formed by the at least one third sequence based on the number of repetitions (may also be referred to as "redundancy") of the repetition encoding.

Exemplarily, assuming that the number of repetitions of the repetition encoding is *N,* then the zero-power device can obtain the second sequence by performing repetition encoding on the values of the bits in the sequence formed by the at least one third sequence according to Table 6.

**Table 6**

| Repetition encoding | |
|---|---|
| Bits in the sequence formed by the at least one third sequence | Bits in the second sequence |
| 0 | 00...00 (*N* 0s) |
| 1 | 11...11 *(N* 1s) |

As illustrated in Table 6, the zero-power device encodes the bits in the sequence formed by the at least one third sequence according to the redundancy *N*, i.e., each bit is repeated *N* times, where "0" is encoded as *N* "0s", and "1" is encoded as *N* "1s".

For example, assuming that the first sequence is "0110", then at least one third sequence is obtained by mapping each bit in the first sequence to one third sequence according to Table 2. Specifically, the at least one third sequence includes the first "01", the first "10", the second "10", and the second "01", i.e., "01 10 10 01". Based on this, the zero-power device can obtain a second sequence by performing repetition encoding on values of bits in a sequence formed by the at least one third sequence. For example, if the number of repetitions *N*=5, the second sequence is: "00000 11111 11111 00000 11111 00000 00000 11111".

For another example, assuming that the first sequence is "0110", then the zero-power device divides "0110" into two encoding groups, i.e., "01" and "10", and then performs sequence mapping on "01" and "10" according to Table 5, to obtain at least one third sequence including "0110" and "1001", i.e., "0110 1001". Based on this, the zero-power device can obtain a second sequence by performing repetition encoding on values of bits in a sequence formed by the at least one third sequence. For example, if the number of repetitions *N*=5, the second sequence is: "00000 11111 11111 00000 11111 00000 00000 11111".

For the receiving device, the receiving device can decode according to the number of "0s" and "1s" in each codeword (e.g., five bits obtained by performing repetition encoding on one bit in the sequence formed by the at least one third sequence). For example, the receiving device obtains the bits in the sequence formed by the at least one third sequence by decoding every five consecutive bits in a second sequence to be decoded. Typically, the idea of "majority rule" can be adopted, a value with the highest frequency is taken as a decoded result of the codeword. Assuming that the *N* bits in each codeword include *N*1 "1s" and *N2* "0s", where *N=N*1+*N*2*,* then: if *N*1> *N2,* the codeword is decoded as a "1"; if *N*1<*N*2, the codeword is decoded as "0"; and if *N1=N2,* the codeword may be determined as "1" or "0" according to the preset rule. Further, if *N1=N2,* the codeword may be determined based on other information, such as the CRC bit or the parity bit. For example, the receiving device may determine the codeword based on the parity bit in the case of *N*1*=N*2. Specifically, assuming that *N*1*=N*2 in a first codeword, then the receiving device can determine a decoded result of the first codeword based on a decoded codeword(s) used for generating the parity bit and a value of the parity code. For another example, the receiving device may determine the codeword based on the CRC bit in the case of *N*1*=N*2*.* Specifically, assuming that *N*1*=N*2 in the first codeword, then the receiving device can determine the decoded result of the first codeword based on a decoded codeword used(s) for generating the CRC bit and a value of the CRC bit. Further, after the receiving device obtains the sequence formed by the at least one third sequence, the receiving device may, according to the mapping relationship, map the third sequence to a bit (e.g., the first mapping relationship) or map the third sequence to an encoding group (e.g., the second mapping relationship), to obtain the first sequence formed by the bit(s) or the encoding group(s). For example, in an embodiment, the zero-power device can calculate a Hamming distance between the third sequence and a candidate sequence corresponding to "1" and a Hamming distance between the third sequence and a candidate sequence corresponding to "0", and select a value corresponding to the candidate sequence with the smaller Hamming distance as the value of the bit in the first sequence.

In this embodiment, when the zero-power device performs repetition encoding on the values of the bits in the sequence formed by the at least one third sequence, the receiving device has the bit-level error correction capability, i.e., when there is an error in the repetition code corresponding to the bit, the receiving device is able to correctly determine an original bit corresponding to the codeword, thereby enhancing the data transmission performance of the zero-power device.

In some embodiments, the zero-power device obtains the second sequence by performing repetition encoding on the third sequence.

Exemplarily, the zero-power device can obtain the second sequence by performing repetition encoding on each of the at least one third sequence based on the number of repetitions of the repetition encoding.

Exemplarily, assuming that the number of repetitions (may also be referred to as "redundancy") of the repetition encoding is *N,* then the zero-power device can obtain the second sequence by performing repetition encoding on each third sequence. Compared with the first sequence, in the second sequence, each third sequence is repeated *N* times.

Exemplarily, assuming that the number of repetitions of the repetition encoding is *N,* then the zero-power device can obtain at least one third sequence by sequence mapping according to Table 2 to Table 4, and obtain the second sequence by performing repetition encoding on each third sequence in a sequence formed by the at least one third sequence.

For example, the zero-power device can perform sequence mapping and repetition encoding according to Table 7:

**Table 7**

| Sequence mapping and repetition encoding | | |
|---|---|---|
| Bits in the first sequence | Third sequences | Output results of the repetition encoding |
| 1 | 10 | 1010 10... 10 (*N* "10"s) |
| 0 | 01 | 01 01 01 ... 01 (*N*"01"s) |

As illustrated in Table 7, the zero-power device performs sequence mapping on the bits in the first sequence according to Table 7, i.e., "1" is mapped to "10" and repetition encoding is performed on "10" to obtain *N* "10"s, and "0" is mapped to "01" and repetition encoding is performed on "01" to obtain *N* "01"s.

For example, the zero-power device can perform sequence mapping and repetition encoding according to Table 8:

**Table 8**

| Sequence mapping and repetition encoding | | |
|---|---|---|
| Bits in the first sequence | Third sequences | Output results of the repetition encoding |
| 1 | 1001 | 1001 1001 1001 ... 1001 (*N* "1001 "s) |
| 0 | 0110 | 0110 0110 0110 ... 0110 (*N* "0110"s) |

As illustrated in Table 8, the zero-power device performs sequence mapping on the bits in the first sequence according to Table 8, i.e., "1" is mapped to "1001" and repetition encoding is performed on "1001" to obtain *N* "1001"s, and "0" is mapped to "0110" and repetition encoding is performed on "0110" to obtain *N* "0110"s.

For example, the zero-power device can perform sequence mapping and repetition encoding according to Table 7:

**Table 9**

| Sequence mapping and repetition encoding | | |
|---|---|---|
| Bits in the first sequence | Third sequences | Output results of the repetition encoding |
| 1 | 1110 | 1110 1110 1110...1110 (*N*"1110"s) |
| 0 | 0001 | 0001 0001 0001...0001 (*N*"0001"'s) |

As illustrated in Table 9, the zero-power device performs sequence mapping on the bits in the first sequence according to Table 9, i.e., "1" is mapped to "1110" and repetition encoding is performed on "1110" to obtain *N* "1110"s, and "0" is mapped to "0001" and repetition encoding is performed on "0001" to obtain *N* "0001 "s.

For example, assuming that the first sequence is "0110", then at least one third sequence is obtained by mapping each bit in the first sequence to one third sequence according to Table 2. Specifically, the at least one third sequence includes the first "01", the first "10", the second "10", and the second "01", i.e., "01 10 10 01". Based on this, the zero-power device can obtain a second sequence by performing repetition encoding on a third sequence in a sequence formed by the at least one third sequence. For example, if the number of repetitions *N*=5, the second sequence is: "01010101 1010101010 1010101010 0101010101".

For another example, assuming that the first sequence is "0110", then the zero-power device divides "0110" into two encoding groups, i.e., "01" and "10", and then sequence mapping is performed on "01" and "10" according to Table 5, to obtain at least one third sequence including "0110" and "1001", i.e., "0110 1001". Based on this, the zero-power device can obtain a second sequence by performing repetition encoding on a third sequence in a sequence formed by the at least one third sequence. For example, if the number of repetitions N=5, the second sequence is: "01100110011001100110 10011001100110011001".

For the receiving device, the receiving device can decode according to the number of "0s" and "1s" in a codeword in each third sequence (e.g., five bits obtained from one bit in the sequence formed by the at least one third sequence during repetition encoding on the third sequence). For example, the receiving device obtains one third-sequence by decoding every five consecutive third sequences in a second sequence to be decoded. For example, when the receiving device decodes "01010101", the receiving device divides "01010101" into five "01"s, and then decodes the first bit (i.e., "0") in the third sequence based on the first bits (i.e., five "0s") in the five "01"s. Typically, the receiving device can adopt the idea of "majority rule" and take a value with the highest frequency as a decoded result of the codeword. Assuming that the *N* bits in each codeword include *N*1 "1s" and *N2* "0s", where *N=N*1+*N*2*,* then: if *N*1> *N2,* the codeword is decoded as a "1"; if *N*1<*N*2, the codeword is decoded as "0"; and if *N1=N2,* the codeword may be determined as "1" or "0" according to the preset rule. Further, if *N1=N2,* the codeword may be determined based on other information, such as the CRC bit or the parity bit. For example, the receiving device may determine the codeword based on the parity bit in the case of *N1=N2.* Specifically, assuming that *N1=N2* in a first codeword, then the receiving device can determine a decoded result of the first codeword based on a decoded codeword(s) used for generating the parity bit and a value of the parity code. For another example, the receiving device may determine the codeword based on the CRC bit in the case of *N1=N2.* Specifically, assuming that *N*1*=N*2 in the first codeword, then the receiving device can determine the decoded result of the first codeword based on a decoded codeword(s) used for generating the CRC bit and a value of the CRC bit. Further, after the receiving device obtains the sequence formed by the at least one third sequence, the receiving device may map the third sequence to a bit according to the mapping relationship (e.g., the mapping relationship as illustrated in Table 2) or map the third sequence to an encoding group according to the mapping relationship (e.g., the mapping relationship as illustrated in Table 5), to obtain the first sequence formed by the bit(s) or the encoding group(s). For example, in an embodiment, the zero-power device can calculate a Hamming distance between the third sequence and a candidate sequence corresponding to "1" and a Hamming distance between the third sequence and a candidate sequence corresponding to "0", and select a value corresponding to the candidate sequence with the smaller Hamming distance as the value of the bit in the first sequence.

In this embodiment, when the zero-power device performs repetition encoding on each of the at least one third sequence, the receiving device has the bit-level error correction capability, i.e., when there is an error in the repetition code corresponding to the bit, the receiving device is able to correctly determine an original bit corresponding to the codeword, thereby enhancing the data transmission performance of the zero-power device.

In some embodiments, the zero-power device obtains the second sequence by performing repetition encoding on the sequence formed by the at least one third sequence.

Exemplarily, the zero-power device can obtain the second sequence by performing repetition encoding on the sequence formed by the at least one third sequence based on the number of repetitions of the repetition encoding.

Exemplarily, assuming that the number of repetitions (may also be referred to as "redundancy") of the repetition encoding is *N,* then the zero-power device can obtain the second sequence by performing repetition encoding on the sequence formed by the at least one third sequence. Compared with the first sequence, in the second sequence, the sequence formed by the at least one third sequence is repeated *N* times.

For example, assuming that the first sequence is "0110", then the at least one third sequence is obtained by mapping each bit in the first sequence to one third sequence according to Table 2. Specifically, the at least one third sequence includes the first "01", the first "10", the second "10", and the second "01", i.e., "01 10 10 01". Based on this, the zero-power device can obtain a second sequence by performing repetition encoding on a sequence formed by the at least one third sequence. For example, if the number of repetitions *N*=5, the second sequence is: "01101001 01101001 01101001 01101001 01101001".

For another example, assuming that the first sequence is "0110", then the zero-power device divides "0110" into two encoding groupings, i.e., "01" and "10", and then performs sequence mapping on "01" and "10" according to Table 5, to obtain at least one third sequence including "0110" and "1001", i.e., "0110 1001". Based on this, the zero-power device can obtain a second sequence by performing repetition encoding on a sequence formed by the at least one third sequence. For example, if the number of repetitions N=5, the second sequence is: "01101001 01101001 01101001 01101001 01101001".

For the receiving device, the receiving device can decode according to the number of "0s" and "1s" in each codeword (e.g., five bits obtained from one bit in the sequence formed by the at least one third sequence during repetition encoding on the sequence formed by the at least one third sequence). For example, when the receiving device decodes a second sequence to be decoded, the receiving device divides the second sequence to be decoded into five "01101001"s, and then decodes the first bit (i.e., "0") in the sequence formed by the at least one third sequence based on the first bits (i.e., five "0s") in the five "01101001"s. Typically, the receiving device can adopt the idea of "majority rule" and take a value with the highest frequency as a decoded result of the codeword. Assuming that the *N* bits in each codeword include *N*1 "1s" and *N*2 "0s", where *N=N*1+*N*2*,* then: if *N*1> *N2,* the codeword is decoded as a "1"; if *N*1<*N*2, the codeword is decoded as "0"; and if *N1=N2,* the codeword may be determined as "1" or "0" according to the preset rule. Further, if *N1=N2,* the codeword may be determined based on other information, such as the CRC bit or the parity bit. For example, the receiving device may determine the codeword based on the parity bit in the case of *N*1*=N*2*.* Specifically, assuming that *N*1*=N*2 in a first codeword, then the receiving device can determine a decoded result of the first codeword based on a decoded codeword(s) used for generating the parity bit and a value of the parity code. For another example, the receiving device may determine the codeword based on the CRC bit in the case of *N*1*=N*2*.* Specifically, assuming that *N*1*=N*2 in the first codeword, then the receiving device can determine the decoded result of the first codeword based on a decoded codeword(s) used for generating the CRC bit and a value of the CRC bit. Further, after the receiving device obtains the sequence formed by the at least one third sequence, the receiving device may map the third sequence to a bit according to the mapping relationship (e.g., the mapping relationship as illustrated in Table 2) or map the third sequence to an encoding group according to the mapping relationship (e.g., the mapping relationship as illustrated in Table 5), to obtain a first sequence formed by the bit(s) or the encoding group(s). For example, in an embodiment, the zero-power device can calculate a Hamming distance between the third sequence and a candidate sequence corresponding to "1" and a Hamming distance between the third sequence and a candidate sequence corresponding to "0", and select a value corresponding to the candidate sequence with the smaller Hamming distance as the value of the bit in the first sequence.

In this embodiment, when the zero-power device performs repetition encoding on the at least one third sequence, the receiving device has the bit-level error correction capability, i.e., when there is an error in the repetition code corresponding to the bit, the receiving device is able to correctly determine an original bit corresponding to the codeword, thereby enhancing the data transmission performance of the zero-power device.

In some embodiments, when the number of bits in the first sequence is *K,* the number of repetitions of the repetition encoding is *N,* and the number of bits in each of the at least one third sequence is *X,* the number of bits in the second sequence is *N*×*X*×*K,* where *N, X,* and *K* each are a positive integer.

Exemplarily, when the zero-power device maps each bit or multiple consecutive bits in the first sequence to one third sequence, if the number of bits in the first sequence is *K,* the number of repetitions of the repetition encoding is *N*, and the number of bits in each of the at least one third sequence is *X,* the number of bits in the second sequence is *N*×*X*×*K,* where *N, X,* and *K* each are a positive integer.

In some embodiments, the third sequence is matched with any one of the following encoding schemes: NRZ encoding, Manchester encoding, unipolar Z encoding, Miller encoding, DBP encoding, differential encoding, PIE, and FM0 encoding.

Exemplarily, when the third sequence is matched with the Manchester encoding, the first mapping relationship can be the mapping relationship illustrated in Table 2, or the second mapping relationship can be the mapping relationship illustrated in Table 5.

Exemplarily, when the third sequence is matched with RZ encoding, the first mapping relationship can be the mapping relationship illustrated in Table 3.

In other alternative embodiments, the third sequence may also be matched to other encoding schemes, which is not limited in the present disclosure.

For example, the third sequence may be a sequence matched with encoding in a wake-up mechanism.

An encoding processing of wake-up radio (WUR) low data rate (LDR) and WUR high data rate (HDR) is illustrated in the following table:

**Table 10**

| WUR LDR | | WUR HDR | |
|---|---|---|---|
| Input bits | Encoded bits | Input bits | Encoded bits |
| 0 | 1010 | 0 | 10 |
| 1 | 0101 | 1 | 01 |

As described in Table 10, for the WUR LDR, when an input bit is "0", encoded bits are "1010", and when the input bit is "1", the encoded bits are "0101". For the WUR HDR, when the input bit is "0", the encoded bits are "10", and when the input bit is "1", the encoded bits are "01". In connection with the solutions of the present disclosure, the first mapping relationship may be a mapping relationship between the input bits and the encoded bits under the WUR LDR or the WUR HDR. For example, when the first mapping relationship is the mapping relationship between the input bits and the encoded bits under the WUR LDR, if a value of a first bit in the first sequence is "0", "1010" is determined as the third sequence; and if the value of the first bit is "1", "0101" is determined as the third sequence. For another example, when the first mapping relationship is the mapping relationship between the input bits and the encoded bits under the WUR HDR, if the value of the first bit in the first sequence is "0", "10" is determined as the third sequence; and if the value of the first bit is "1", "01" is determined as the third sequence.

In some embodiments, the first sequence includes a fourth sequence and a CRC bit corresponding to the fourth sequence.

Exemplarily, the CRC bit is determined according to the fourth sequence.

Exemplarily, the CRC bit includes one bit or multiple consecutive bits.

Exemplarily, the zero-power device adds M CRC bits based on a fourth sequence with the number of *Y* bits (e.g., *Y* is a positive integer) (e.g., adding the *M* CRC bits at one position in the fourth sequence, or adding a different bit among the *M* CRC bits at a different position in the first sequence), to obtain a sequence with the CRC bits added (i.e., the first sequence), with a length of *Y+M* bits. Then, the zero-power device obtains an encoded sequence of (*Y+M*)×*N* bits (i.e., the second sequence) by encoding the first sequence based on the redundancy *N*. Finally, the zero-power device obtains a modulated signal by modulating the second sequence, and sends the modulated signal. The modulation scheme for the second sequence includes, but is not limited to, OOK modulation, ASK modulation, PSK modulation, FSK modulation, etc.

Correspondingly, the receiver obtains a second sequence of (*Y+M*)×*N* bits by demodulating a received signal, and then obtains a first sequence with the length of *Y+M* bits through a decoding process corresponding to the repetition code, where the first sequence is a bit sequence with the CRC bits added based on the fourth sequence. The receiver performs CRC check based on the CRC polynomial in CRC encoding. For example, if the CRC check is passed, the fourth sequence of *Y* bits is considered to be correctly received; otherwise, the fourth sequence of *Y* bits is considered to be incorrectly received, and data retransmission of the fourth sequence is required.

In this embodiment, by introducing the CRC bit(s), during signal reception, the receiver can check the signal sent by the zero-power device, to determine whether data sent by the zero-power device is successfully received. In other words, error detection on the data sent by the zero-power device is supported at the receiver, thereby further enhancing the data transmission performance of the zero-power device.

In some embodiments, the CRC bit is positioned after the fourth sequence.

Exemplarily, *M* final bits in the first sequence are CRC bits.

In some embodiments, the first sequence includes a fourth sequence and at least one parity bit.

Exemplarily, the zero-power device adds *S* parity bits (e.g., *S* is a positive integer) based on a fourth sequence with the number of *Y* bits (e.g., Y is a positive integer) (e.g., adding the S parity bits at one position in the fourth sequence, or adding a different bit among the S parity bits at a different position in the first sequence), to obtain a sequence with the parity bits added (i.e., the first sequence), with a length of *Y+S* bits. Then, the zero-power device obtains an encoded sequence of (*Y+S*)×*N* bits (i.e., the second sequence) by encoding the first sequence based on the redundancy *N*. Finally, the zero-power device obtains a modulated signal by modulating the second sequence, and sends the modulated signal. The modulation scheme for the second sequence includes, but is not limited to, OOK modulation, ASK modulation, PSK modulation, FSK modulation, etc.

Correspondingly, the receiver obtains a second sequence of (*Y+S*)×*N* bits by demodulating a received signal, and then obtains a first sequence with the length of *Y+S* bits through a decoding process corresponding to the repetition code, where the first sequence is a bit sequence with the parity bits added based on the fourth sequence. The receiving device can determine the fourth sequence with the number of *Y* bits and the parity bits with the number of *S* bits in the first sequence according to the manner in which the zero-power device adds the *S* parity bits. Further, if there is a to-be-determined bit in the fourth sequence, the receiver can perform parity check on the to-be-determined bit according to a determination manner in parity bit encoding, and perform error correction through parity check.

In this embodiment, by introducing the at least one parity bit, during signal reception, the receiver can support parity check on the signal sent by the zero-power device. In other words, error correction can be performed on the bits in the fourth sequence when transmission errors occur, thereby further enhancing the data transmission performance of the zero-power device.

It may be noted that, the at least one parity bit can be used for assisting the receiving end in error correction. Specifically, in bits for determining a first parity bit of the at least one parity bit, when the number of "1" is even, the first parity bit is set to "0"; otherwise, the first parity bit is set to "1". Alternatively, when the number of "1" is even, the first parity bit is set to "1"; otherwise, the first parity bit is set to "0".

In some embodiments, the at least one parity bit is positioned after the fourth sequence.

Exemplarily, *S* final bits in the first sequence are parity bits.

In some embodiments, the fourth sequence is a sequence to be divided, the sequence to be divided includes at least one check group after division, and the first parity bit among the at least one parity bit is positioned after a first check group among the at least one check group.

Exemplarily, the fourth sequence includes at least one check group after division, and each of the at least one check group is followed by *W* (*W*≥1) parity bits. In other words, the first sequence can be obtained by interleaving the at least one check group and the at least one parity bit.

In some embodiments, the first sequence includes a fourth sequence, a CRC bit corresponding to the fourth sequence, and at least one parity bit.

Exemplarily, the zero-power device adds, based on a fourth sequence with the number of *Y* bits (e.g., *Y* is a positive integer), *M* CRC bits (e.g., adding the *M* CRC bits at one position in the fourth sequence, or adding a different bit among the *M* CRC bits at a different position in the first sequence) and S parity bits (e.g., adding the *S* parity bits at one position in the fourth sequence, or adding a different bit among the *S* parity bits at a different position in the first sequence), to obtain a sequence with the parity bits added (i.e., the first sequence), with a length of *Y+M+S* bits. Then, the zero-power device obtains a second sequence by performing repetition encoding on the first sequence based on the redundancy *N*. In an embodiment, the zero-power device obtains an encoded sequence of (*Y*+*M*+*S*)×*N* bits (i.e., the second sequence) by performing repetition encoding directly on the bits in the first sequence. In another embodiment, the zero-power device can obtain at least one third sequence by mapping each bit in the first sequence to a third sequence with the number of *X* bits, and then obtain a encoded sequence of (*Y*+*M*+*S*)×*X*×*N* bits (i.e., the second sequence) by performing repetition encoding based on a sequence formed by the at least one third sequence. In another embodiment, the zero-power device can divide the first sequence into at least one encoding group, and map the at least one encoding group to at least one third sequence. If the encoding group has the number of *U* bits and the third sequence has the number of *X* bits, an encoded sequence of (*Y+M+S)*/*U*×*X*×*N* bits (i.e., the second sequence) can be obtained by performing repetition encoding based on a sequence formed by the at least one third sequence. After the zero-power device obtains the second sequence, the zero-power device obtains a modulated signal by modulating the second sequence, and sends the modulated signal. The modulation scheme for the second sequence includes, but is not limited to, OOK modulation, ASK modulation, PSK modulation, FSK modulation, etc.

Correspondingly, the receiver demodulates a received signal, to obtain a second sequence with the number of (*Y+M+S*)×*N* bits, (*Y+M+S*)×*X*×*N* bits*,* or (*Y+M+S*)/*U*×*X*×*N* bits*.* Then, the receiver obtains a first sequence with the length of *Y+M+S* bits through a decoding process and an inverse mapping (when necessary) that correspond to the repetition code, where the first sequence is a bit sequence with the CRC bits and the parity bits added based on the fourth sequence. Based on this, for one thing, the receiver performs CRC check based on the CRC polynomial in CRC encoding. Specifically, if the CRC check is passed, the fourth sequence of *Y* bits is considered to be correctly received; otherwise, the fourth sequence of *Y* bits is considered to be incorrectly received, and data retransmission of the fourth sequence is required. For another thing, the receiving device can determine the fourth sequence with the number of *Y* bits and the parity bits with the number of S bits in the first sequence according to the manner in which the zero-power device adds the S parity bits. Further, if there is a to-be-determined bit in the fourth sequence, the receiver can perform parity check on the to-be-determined bit according to a determination manner in parity bit encoding, and perform error correction through parity check.

In this embodiment, by introducing the CRC bit(s) and the at least one parity bit, during signal reception, the receiver can support CRC check and parity check on the signal sent by the zero-power device, such that error detection on the data sent by the zero-power device is supported at the receiver, and that error correction can be performed on the bits in the fourth sequence when transmission errors occur, thereby further enhancing the data transmission performance of the zero-power device.

It may be noted that, there are two manners for the zero-power device to add both the parity bit and the CRC bit as follows.

### Manner 1:

The zero-power device first adds the parity bit(s) (the number of bits is *S, S*≥1) based on the fourth sequence (the number of bits is *Y*), to obtain a bit sequence with the parity bits added (the number of bits is *Y+S*), and based on this, the zero-power device adds the CRC bit(s) (the number of bits is *M*)*,* to obtain a bit sequence with the parity bit and the CRC bit added (the number of bits is *Y+S+M*), i.e., the first sequence. Then, the zero-power device performs repetition encoding based on the first sequence and the redundancy *N*, to obtain a second sequence with the number of (*Y+M+S*)×*N* bits, (*Y+M+S*)×*X*×*N* bits*,* or (*Y+M+S*)/*U*×*X*×*N* bits*,* where *X is* the number of bits in a third sequence when a bit or an encoding group in the first sequence is mapped to the third sequence, and *U* is the number of bits in an encoding group when the first sequence is divided into at least one encoding group and each encoding group is mapped to one third sequence.

### Manner 2:

The zero-power device first adds the CRC bit(s) ((the number of bits is *S, S*≥1) is *M*) based on the fourth sequence (the number of bits is *Y*), to obtain a bit sequence with the CRC bits added (the number of bits is *Y+M*)*,* and based on this, the zero-power device adds the parity bit(s) (the number of bits is *S, S*≥1), to obtain a bit sequence with the parity bit and the CRC bit added (the number of bits is *Y+M+S*)*,* i.e., the first sequence. Then, the zero-power device performs repetition encoding based on the first sequence and the redundancy *N*, to obtain a second sequence with the number of (*Y*+*M+S*)×*N* bits, (*Y+M+S*)×*X*×*N* bits*,* or (*Y+M+S*)/*U*×*X*×*N* bits, where *X* is the number of bits in a third sequence when a bit or an encoding group in the first sequence is mapped to the third sequence, and *U is* the number of bits in an encoding group when the first sequence is divided into at least one encoding group and each encoding group is mapped to one third sequence.

In some embodiments, the first sequence sequentially includes: the fourth sequence, the CRC bit, and the at least one parity bit.

Exemplarily, *S* final bits in the first sequence are the at least one parity bit, and *M* bits prior to the at least one parity bit are the CRC bits.

In some embodiments, the first sequence sequentially includes: the fourth sequence, the at least one parity bit, and the CRC bit.

Exemplarily, *M* final bits in the first sequence are the CRC bits, and *S* bits prior to the CRC bit are the at least one parity bit.

In some embodiments, the fourth sequence is a sequence to be divided, the sequence to be divided includes at least one check group after division, a first parity bit among the at least one parity bit is positioned after a first check group among the at least one check group, and the CRC bit is positioned after a sequence formed by the fourth sequence and the at least one parity bit.

Exemplarily, *W* (*W* is a positive integer) first parity bits among the at least one parity bit are positioned after the first check group among the at least one check group. In other words, the fourth sequence includes at least one check group after division, and each of the at least one check group is followed by *W* (*W*≥1) parity bits. The CRC bit(s) is positioned after the sequence formed by the fourth sequence and the at least one parity bit. In other words, the CRC bit can be added after a sequence obtained by interleaving the at least one check group and the at least one parity bit.

In some embodiments, a sequence formed by the fourth sequence and the CRC bit is a sequence to be divided, the sequence to be divided includes at least one check group after division, and the first parity bit among the at least one parity bit is positioned after a first check group among the at least one check group.

Exemplarily, *W* (*W is* a positive integer) first parity bits among the at least one parity bit are positioned after the first check group among the at least one check group. In other words, the sequence formed by the fourth sequence and the CRC bit(s) includes at least one check group after division, and each of the at least one check group is followed by *W*(*W*≥1) parity bits. In other words, the CRC bit can be added after a sequence obtained by interleaving the at least one check group and the at least one parity bit.

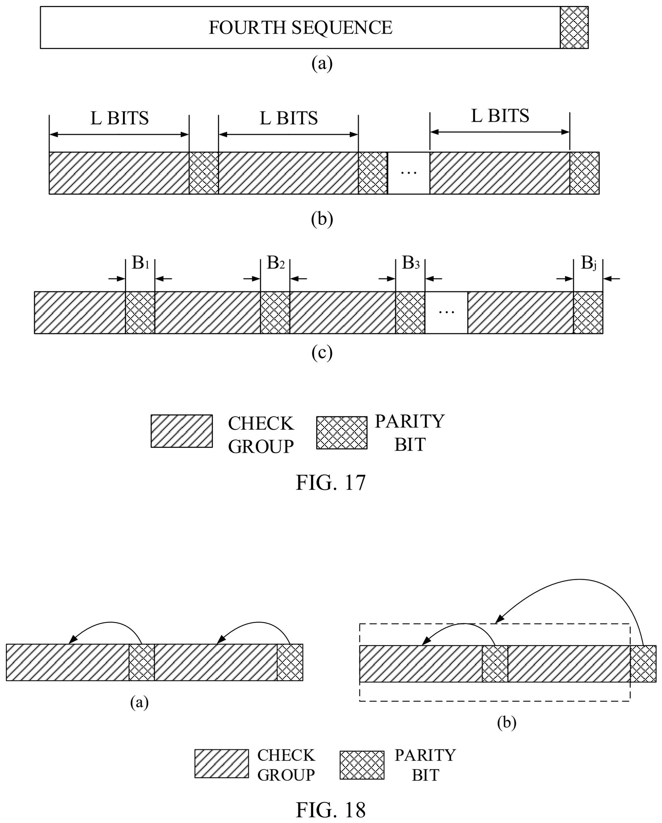

FIG. 17 is an example illustrating a positional relationship between a check group(s) and a parity bit(s) in a first sequence provided in embodiments of the present disclosure.

As illustrated in (a) in FIG. 17, the zero-power device may obtain a first sequence by only adding one or more parity bits to the end of the fourth sequence. As illustrated in (b) in FIG. 17, the zero-power device may obtain a first sequence by adding one or more parity bits after every *L* bits (i.e., each check group) in the fourth sequence, where *L* may be specified in the protocol or may be indicated by the network device. In other words, the zero-power device can divide a fourth sequence of *Y* bits into *Y*/*L* check groups, and every *L* consecutive bits are followed by one or more parity bits. As illustrated in (c) in FIG. 17, the zero-power device may also add *J* parity bits, where *J* may be specified in the protocol or may be indicated by the network device. For example, the zero-power device can divide the sequence to be divided (e.g., the fourth sequence or the sequence formed by the fourth sequence and the CRC bit) into *P* (*P*≥1, *P*≤*J*) check groups, where each check group is followed by one or more parity bits. For example, when *P* is equal to *J,* the zero-power device can divide the sequence to be divided (e.g., the fourth sequence or the sequence formed by the fourth sequence and the CRC bit) into *J* parity groups, where each parity group is followed by one parity bit, i.e., B₁ to Bⱼ are distributed among and interleaved with the *J* parity groups, to obtain the first sequence.

In some embodiments, a check group used for determining the first parity bit among the at least one check group does not overlap a check group used for determining a parity bit other than the first parity bit among the at least one check group.

Exemplarily, the at least one check group is in one-to-one correspondence with the at least one parity bit.

Exemplarily, when the number of the at least one parity bit is greater than 1, different parity bits can correspond to different data, respectively (i.e., data used for determining different parity bits do not overlap each other). For example, assuming that there is a parity bit at each of three positions, i.e., *kᵢ, kⱼ,* and *kₘ* (*i*<*j*<*m*), in the first sequence, then the parity bit at position *kᵢ* is determined according to bits prior to *kᵢ* (there is no parity bit prior to *kᵢ*), the parity bit at position *kⱼ* is determined according to bits between *k*_{*i*+1} and *k*_{*j-*1} (including *k*_{*i*+1} and *k*ⱼ₋₁), and the parity bit at position *kₘ* is determined according to bits between *k*_{*j+*1} and *k*_{*m*-1} (including *k*_{*j+*1} and *k*_{*m-*1})*.*

In some embodiments, the first parity bit is determined according to the first check group.

Exemplarily, the first check group is any one of the at least one check group. In other words, any one of the at least one check group is followed by a parity bit determined based on the any one check group.

In some embodiments, the check group used for determining the first parity bit among the at least one check group at least partially overlaps the check group used for determining the parity bit other than the first parity bit among the at least one check group.

Exemplarily, the at least one check group is in many-to-one correspondence with the at least one parity bit.

In some embodiments, the first parity bit is determined according to the first check group and a check group prior to the first check group.

Exemplarily, the first check group is any one of the at least one check group. In other words, any one of the at least one check group is followed by a parity bit determined based on the following information: the any one check group and a check group prior to the any one check group.

Exemplarily, when the number of the at least one parity bit is greater than 1, different parity bits can correspond to different data, respectively (i.e., data used for determining different parity bits do not overlap each other). For example, assuming that there is a parity bit at each of three positions, i.e., *kᵢ, kⱼ,* and *kₘ* (*i*<*j*<*m*), then the parity bit at position *kᵢ* is determined according to bits prior to *kᵢ* (there is no parity bit prior to *kᵢ*), the parity bit at position *kⱼ* is determined according to bits prior to *kⱼ* (not including the parity bit at position *kᵢ),* and the parity bit at position *kₘ* is determined according to bits prior to *kₘ* (not including the parity bit at position *kᵢ* and the parity bit at position *kⱼ).*

In some embodiments, the first parity bit is determined according to the first check group, the check group prior to the first check group, and a parity bit determined based on the check group prior to the first check group among the at least one parity bit.

Exemplarily, the first check group is any one of the at least one check group. In other words, any one of the at least one check group is followed by a parity bit determined based on the following information: the any one check group, a check group prior to the any one check group, and a parity bit determined based on the check group prior to the any one check group.

Exemplarily, when the number of the at least one parity bit is greater than 1, different parity bits can correspond to different data, respectively (i.e., data used for determining different parity bits do not overlap each other). For example, assuming that there is a parity bit at each of three positions, i.e., *kᵢ, kⱼ,* and *kₘ* (*i*<*j*<*m*), then the parity bit at position *kᵢ* is determined according to bits prior to *kᵢ* (there is no parity bit prior to *kᵢ*), the parity bit at position *kⱼ* is determined according to bits prior to *kⱼ* (including the parity bit at position *kᵢ*), and the parity bit at position *kₘ* is determined according to bits prior to *kₘ* (including the parity bit at position *kᵢ* and the parity bit at position *kⱼ).*

FIG. 18 is another example illustrating a positional relationship between check groups and parity bits in a first sequence provided in embodiments of the present disclosure.

Assume that the first sequence or the sequence formed by the first sequence and the CRC bit includes two check groups after division. As illustrated in (a) in FIG. 18, in an embodiment, the first parity bit is determined according to the first check group among the two check groups and then is added after the first check group, and the second parity bit is determined according to the second check group among the two check groups and then is added after the second check group, thereby obtaining the first sequence. As illustrated in (b) of FIG. 18, in another embodiment, the first parity bit is determined according to the first check group among the two check groups and then is added after the first check group, and the second parity bit is determined according to the two check groups (which may or may not include the first parity bit) and then is added after the second check group, thereby obtaining the first sequence.

In some embodiments, the fourth sequence is a data bit sequence.

Exemplarily, the data bit sequence may also be referred to as an "original data sequence".

In some embodiments, the method 200 can further include the following. The zero-power device first obtains the maximum number of bits in each of the at least one check group, and then divides every consecutive maximum number of bits in the sequence to be divided into one of the at least one check group.

Exemplarily, the maximum number of bits is a positive integer.

In some embodiments, the number of bits in each of the at least one check group is the maximum number of bits.

In some embodiments, when the number of bits in the sequence to be divided is equal to an integer multiple of the maximum number of bits, the number of bits in each of the at least one check group is the maximum number of bits.

In some embodiments, when the number of undivided bits in the sequence to be divided is less than the maximum number of bits, a final check group among the at least one check group is obtained based on the undivided bits and a padding bit(s), where a total number of the undivided bits and the padding bit(s) is the maximum number of bits.

Exemplarily, if the number of bits in the sequence to be divided is not equal to an integer multiple of the maximum number of bits, when the number of undivided bits in the sequence to be divided is less than the maximum number of bits, the zero-power device can obtain the final check group among the at least one check group based on the undivided bits and the padding bit(s), where the total number of the undivided bits and the padding bit(s) is the maximum number of bits.

In other alternative embodiments, if the number of undivided bits in the sequence to be divided is less than the maximum number of bits, the undivided bits may not be discarded, which is not limited in the present disclosure.

In some embodiments, the number of bits in each of the at least one check group except the final check group is the maximum number of bits, and the number of bits in the final check group is less than the maximum number of bits.

Exemplarily, if the number of bits in the sequence to be divided is not equal to an integer multiple of the maximum number of bits, the number of bits in each of the at least one check group except the final check group is the maximum number of bits, and the number of bits in the final check group is less than the maximum number of bits.

In other alternative embodiments, the number of bits in another check group may be less than the maximum number of bits, which is not specifically limited in embodiments of the present disclosure. For example, in a specific embodiment, the number of bits in each of the at least one check group except the first check group may be the maximum number of bits, and the number of bits in the first check group may be less than the maximum number of bits.

In some embodiments, when the number of undivided bits in the sequence to be divided is less than the maximum number of bits, the undivided bits are determined as the final check group among the at least one check group.

Exemplarily, if the number of bits in the sequence to be divided is not equal to an integer multiple of the maximum number of bits, when the number of undivided bits in the sequence to be divided is less than the maximum number of bits, the zero-power device can directly determine the undivided bits as the final check group among the at least one check group.

In some embodiments, the maximum number of bits is configured by the network device, or the maximum number of bits is predefined.

The maximum number of bits can be predefined by pre-saving corresponding codes, table, or other forms indicating related information in a device (e.g., including a terminal device and a network device), which is not limited in the present disclosure. For example, "predefined" may refer to "defined in the protocol". It may also be understood that, in embodiments of the present disclosure, the "protocol" may refer to the standard protocol in the field of communication, such as LTE protocol, NR protocol, and related protocols applicable to future communication systems, which is not limited in the present disclosure.

In some embodiments, the zero-power device determines the maximum number of bits based on the number of bits in the sequence to be divided.

Exemplarily, a relationship between the number of bits in the sequence to be divided and the maximum number of bits is positively correlated. That is, a greater number of bits in the sequence to be divided leads to a greater maximum number of bits. Similarly, a smaller number of bits in the sequence to be divided leads to a smaller maximum number of bits.

In some embodiments, the zero-power device first obtains a third mapping relationship, where the third mapping relationship includes a correspondence between multiple values and multiple candidate numbers of bits, and the multiple values include a third value with a minimum difference from the number of bits in the sequence to be divided. Then, the zero-power device determines a candidate number of bits corresponding to the third value as the maximum number of bits.

Exemplarily, the third mapping relationship may be configured by the network device, may be predefined, may be determined by the zero-power device, or may be negotiated between the zero-power device and the network device.

In some embodiments, the third mapping relationship is a mapping relationship determined by the zero-power device from multiple mapping relationships configured by the network device, or the third mapping relationship is a mapping relationship determined by the zero-power device from multiple predefined mapping relationships.

Exemplarily, the third mapping relationship may be a mapping relationship matched with the number of bits in the first sequence (or the type of the information of the first sequence, etc.) among the multiple mapping relationships. The type of information of the first sequence includes, but is not limited to, a data type, a control type, etc.

In some embodiments, the zero-power device first obtains a fourth mapping relationship, where the fourth mapping relationship includes a correspondence between multiple value ranges and multiple numbers of bits, and the number of bits in the sequence to be divided is in a first value range among the multiple value ranges. Then, the zero-power device determines the number of bits corresponding to the first value range as the maximum number of bits.

Exemplarily, the fourth mapping relationship may be configured by the network device, may be predefined, may be determined by the zero-power device, or may be negotiated between the zero-power device and the network device.

In some embodiments, the fourth mapping relationship is a mapping relationship determined by the zero-power device from the multiple mapping relationships configured by the network device, or the fourth mapping relationship is a mapping relationship determined by the zero-power device from the multiple predefined mapping relationships.

Exemplarily, the fourth mapping relationship may be a mapping relationship matched with the number of bits in the first sequence (or the type of the information of the first sequence, etc.) among the multiple mapping relationships. The type of information of the first sequence includes, but is not limited to, a data type, a control type, etc.

In some embodiments, the zero-power device obtains a fourth value, where the fourth value indicates the number of the at least one check group and/or the number of the at least one parity bit. Then, the zero-power device determines the maximum number of bits based on the number of bits in the sequence to be divided and the fourth value.

In some embodiments, the zero-power device determines the maximum number of bits based on a ratio of the number of bits in the sequence to be divided to the fourth value.

Exemplarily, the zero-power device directly determines the ratio of the number of bits in the sequence to be divided to the fourth value as the maximum number of bits.

Exemplarily, the zero-power device determines a value by rounding up a value of the ratio of the number of bits in the sequence to be divided to the fourth value as the maximum number of bits. Alternatively, the zero-power device determines a value by rounding down the value of the ratio of the number of bits in the sequence to be divided to the fourth value as the maximum number of bits.

In some embodiments, the fourth value is configured by the network device, or the fourth value is predefined.

Exemplarily, the fourth value may be a value determined from multiple values configured by the network device or multiple predefined values. For example, the fourth value may be a mapping relationship matched with the number of bits in the first sequence (or the type of the information of the first sequence, etc.) among the multiple values. The type of information of the first sequence includes, but is not limited to, a data type, a control type, etc.

In some embodiments, the method 200 can further include the following. The zero-power device interleaves the second sequence.

Exemplarily, the interleaving may be implemented through a row-column interleaver, i.e., row-in and column-out, similar to the interleaving in the NR.

Exemplarily, when the zero-power device performs repetition encoding on the values of the bits in the first sequence, the zero-power device performs interleaving according to the length of the first sequence.

In embodiments of the present disclosure, when the zero-power device performs repetition encoding on the values of the bits in the first sequence, the zero-power device performs interleaving according to the length of the first sequence, and can distribute N consecutive "1s" or "0s", thereby further enhancing the data transmission performance of the zero-power device.

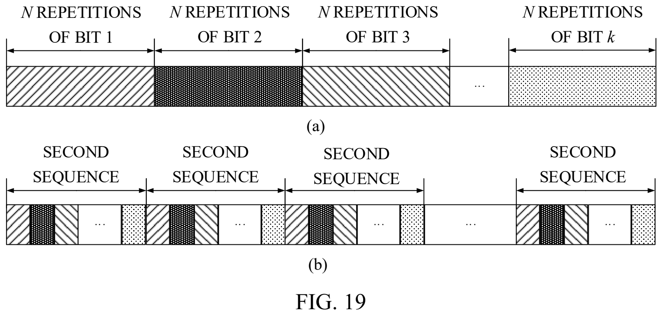

FIG. 19 is an example illustrating an interleaving principle provided in embodiments of the present disclosure.

As illustrated in (a) of FIG. 19, when the zero-power device performs repetition encoding on the values of the bits in the first sequence, if the first sequence includes bit 1 to bit *k,* the second sequence includes *N* repetitions of bit 1, *N* repetitions of bit 2, ..., and *N* repetitions of bit k. After the zero-power device performs interleaving according to the length of the first sequence, a sequence as illustrated in (b) of FIG. 19, i.e., *N* repetitions of the second sequence, can be obtained.

In some embodiments, the method 200 can further include the following. First encoding is performed on the second sequence.

Exemplarily, the first encoding is used for implementing a digital-to-analog conversion.

In some embodiments, the method 200 can further include the following. The zero-power device obtains a first signal by modulating based on the second sequence or a sequence obtained by performing first encoding on the second sequence, and then sends the first signal.

Exemplarily, the first signal may be a backscattered signal, or the first signal may be a signal actively sent by the zero-power device.

In some embodiments, the first sequence includes a prefix sequence. The zero-power device obtains the first signal by modulating the second sequence or the sequence obtained by performing first encoding on the second sequence.

In some embodiments, the zero-power device obtains a fifth sequence by adding the prefix sequence to the second sequence or the sequence obtained by performing first encoding on the second sequence, and then obtains the first signal by modulating the fifth sequence.

Exemplarily, the zero-power device adds the prefix sequence before modulating the second sequence.

Exemplarily, the zero-power device adds the prefix sequence after modulating the second sequence.

In other alternative embodiments, the zero-power device may also add the prefix sequence before performing repetition encoding, which is not specifically limited in the present disclosure. In other words, the prefix sequence may be involved in the encoding (added before encoding) or may not be involved in the encoding (added before modulation).

In some embodiments, the prefix sequence is configured by the network device, the prefix sequence is predefined, or the prefix sequence is determined according to the number of repetitions of the repetition encoding.

Exemplarily, a different number of repetitions may correspond to a different prefix sequence.

Exemplarily, the prefix sequence is used for the receiving device to identify a data starting position when performing data reception.

In some embodiments, a modulation scheme used for the second sequence or the sequence obtained by performing first encoding on the second sequence includes at least one of: ASK modulation, OOK modulation, FSK modulation, or PSK modulation.

Exemplarily, the modulation scheme applied to the sequence obtained by performing first encoding on the second sequence includes the OOK modulation and the ASK modulation.

The OOK modulation and the ASK modulation are used for converting bit 0 and bit 1 to corresponding levels.

The modulation schemes are only examples and shall not be construed as a limitation to the present disclosure. For example, in other alternative embodiments, more complex modulation schemes may be applied.

In some embodiments, the first encoding includes at least one of: NRZ encoding, unipolar RZ encoding, Manchester encoding, Miller encoding, DBP encoding, differential encoding, PIE, or FM0 encoding.

In some embodiments, the method 200 can further include the following. The zero-power device sends the second sequence.

Exemplarily, the zero-power device can directly send the repetition-encoded second sequence.

Exemplarily, the second sequence may be a backscattered signal, or the second sequence may be a signal actively sent by the zero-power device.

In some embodiments, the method 200 can further include the following. The zero-power device determines the number of repetitions of the repetition encoding based on at least one of the following information of the first sequence: a data block size, a bitrate, or a communication rate.

Exemplarily, a different communication rate corresponds to a different correspondence. For example, for a certain communication rate, a different number of repetitions *N* can be determined according to a different data block size and/or a different bitrate. For another example, for a certain bitrate, a different number of repetitions *N* can be determined according to a different data block size and/or a different communication rate. For example, for a certain data block size, a different number of repetitions *N* can be determined according to a different communication rate and/or a different bitrate. The correspondence can be implemented as a base graph (BG).

It may be noted that, a value of the number of repetitions *N* affects not only the data transmission performance but also the communication data rate. Generally, a greater number of repetitions *N* leads to better data transmission performance and a lower corresponding data rate. In embodiments of the present disclosure, in the zero-power communication, the size of the sent data is different, and different application scenarios have different requirements for data transmission performance and communication rate. Based on this, the zero-power device can determine the number of repetitions of the repetition encoding based on at least one of the data block size, the bitrate, and the communication rate, such that the number of repetitions of the repetition encoding can support multiple values of *N,* which means that a suitable value of *N* can be determined according to actual communication scenarios, thereby balancing the data transmission performance and the data transmission rate.

In other alternative embodiments, the zero-power device can also determine the number of repetitions of the repetition encoding based on at least one of the following information of the first sequence: a traffic type of the first sequence or an application scenario of the zero-power device. The application scenario may also be referred to as "communication scenario".

In some embodiments, the number of repetitions of the repetition encoding may be configured by the network device, or the number of repetitions of the repetition encoding may be predefined.

Exemplarily, the number of repetitions of the repetition encoding may be a number of repetitions selected by the zero-power device among multiple numbers of repetitions. The multiple numbers of repetitions may be associated with at least one of: multiple data block sizes, multiple bitrates, multiple communication rates, multiple service types, and multiple application scenarios.

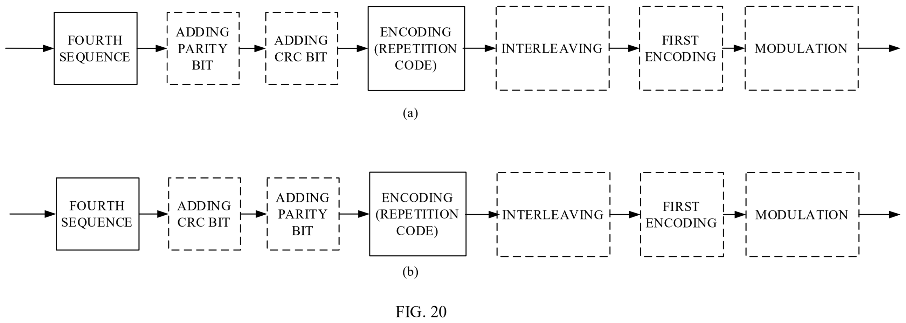

FIG. 20 is a schematic flowchart illustrating repetition encoding provided in embodiments of the present disclosure.

After the zero-power device obtains the fourth sequence, the zero-power device can send a signal based on the fourth sequence, and the fourth sequence is a data bit sequence. For example, in an embodiment, as illustrated in (a) in FIG. 20, a modulated first signal is obtained by sequentially adding the parity bit, adding the CRC bit, performing repetition encoding, interleaving, performing first coding, and modulating, and then the first signal is sent. For another example, in another embodiment, as illustrated in (a) in FIG. 20, after the zero-power device obtains the fourth sequence, the zero-power device obtains a modulated first signal by sequentially adding the CRC bit, adding the parity bit, performing repetition encoding, interleaving, performing first coding, and modulating, and then sends the first signal. Dashed boxes in the figure indicate enhanced (i.e., optional) manners that can be selected according to the design in actual implementations.

FIG. 20 is only an example in the present disclosure and shall not be construed as a limitation to the present disclosure.

For example, repetition encoding on a pre-modulated sequence or bits in the pre-modulated sequence by the zero-power device may be extended to repetition encoding on modulated symbols.

It may be noted that, in the present disclosure, the configuration by the network device includes, but is not limited to, a semi-static configuration and a dynamic indication. When the configuration is performed through dynamic indication, information may be configured directly, or an index of the information may be configured (i.e., indirectly configured), which is not specifically limited in the present disclosure.

Preferable embodiments of the present disclosure have been described in detail above with reference to the accompanying drawings. However, the present disclosure is not limited to the details described in the foregoing embodiments. Within the scope of the technical concept of the present disclosure, various simple modifications can be made to the technical solutions of the present disclosure, and these simple modifications all fall within the protection scope of the present disclosure. For example, various technical features described in the foregoing embodiments may be combined in any suitable manner without contradiction, and in order to avoid unnecessary redundancy, various possible combinations are not further described in the present disclosure. For another example, various embodiments of the present disclosure may also be combined in any manner, and as long as the combinations do not depart from the idea of the present disclosure, they may also be considered as contents disclosed in the present disclosure.

It may also be understood that, in various method embodiments of the present disclosure, the magnitude of a sequence number of each of the foregoing processes does not mean an execution order, and an execution order of each process may be determined according to a function and an internal logic of the process, which shall not constitute any limitation to an implementation process of embodiments of the present disclosure.

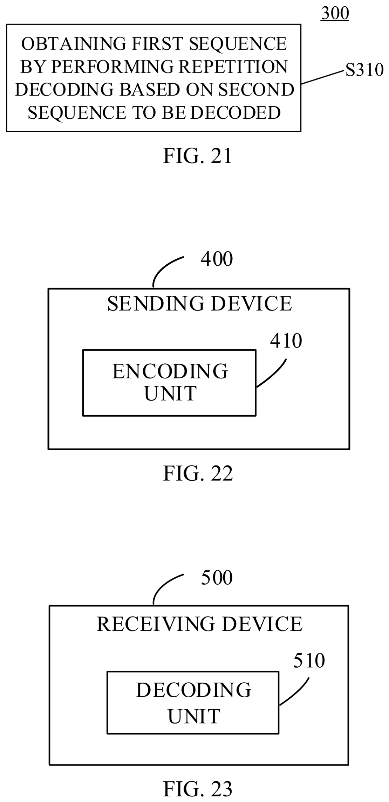

The wireless communication method provided in embodiments of the present disclosure is described in detail above in connection with FIG. 16 to FIG. 20 from the perspective of repetition encoding by the zero-power device, and a wireless communication method provided in embodiments of the present disclosure will be described below in connection with FIG. 21 from the perspective of repetition decoding by the zero-power device.

FIG. 21 is a schematic flowchart of a wireless communication method 300 provided in embodiments of the present disclosure.

It may be noted that, the wireless communication method 300 can be performed by a receiving device, and the receiving device may be a network device or a terminal device. In other words, the wireless communication method is applied to wireless communication between the receiving device and a sending device (including at least one of: the terminal device receiving data sent by the network device, the network device receiving data sent by the terminal device, or the terminal device receiving data sent by the terminal device). For example, the terminal device may be a zero-power device, and the zero-power device may be a device that supports at least one of the following communication modes: communication through backscattering or communication through active transmission. For example, the zero-power device may be a conventional NR terminal loaded with or integrated with a backscatter communication module.

As illustrated in FIG. 21, the method 300 can include the following.

At S310, a first sequence is obtained by performing repetition decoding based on a second sequence to be decoded.

In some embodiments, the operations at S310 can include the following. The first sequence is obtained by performing repetition decoding on values of bits in the first sequence based on the second sequence.

In some embodiments, the operations at S310 can include the following. The first sequence is obtained by performing repetition decoding on the first sequence based on the second sequence.

In some embodiments, when the number of bits in the second sequence is *N*×*K* and the number of repetitions of the repetition decoding is *N,* the number of bits in the second sequence is *K*, where *N* and *K* each are a positive integer.

In some embodiments, the operations at S310 can include the following. At least one third sequence is determined by performing repetition decoding based on the second sequence. The first sequence is determined based on the at least one third sequence.

In some embodiments, the first sequence is determined based on the at least one third sequence as follows. Values of bits in the first sequence are determined based on the third sequence.

In some embodiments, the values of the bits in the first sequence are determined based on the third sequence as follows. A first mapping relationship is obtained, where the first mapping relationship includes a correspondence between a first value and a first candidate sequence and a correspondence between a second value and a second candidate sequence. When the third sequence is the first candidate sequence, the first value is determined as a value of a first bit in the first sequence. When the third sequence is the second candidate sequence, the second value is determined as the value of the first bit.

In some embodiments, the first candidate sequence and the second candidate sequence have different values at the same bit position.

In some embodiments, the first sequence is determined based on the at least one third sequence as follows. At least one decoding group is determined based on the at least one third sequence, where each of the at least one decoding group includes one or more bits in the first sequence.

In some embodiments, the at least one decoding group is determined based on the at least one third sequence as follows. A second mapping relationship, where the second mapping relationship includes a correspondence between multiple values and multiple candidate sequences, and the multiple candidate sequences include the at least one third sequence. A value corresponding to each of the at least one third sequence is determined as the at least one decoding group.

In some embodiments, the number of the multiple candidate sequences is positively correlated with the number of bits of each of the multiple values.

In some embodiments, the at least one third sequence is determined by performing repetition decoding based on the second sequence as follows. The at least one third sequence is determined by performing repetition decoding on values of bits in the third sequence based on the second sequence.

In some embodiments, the at least one third sequence is determined by performing repetition decoding based on the second sequence as follows. The at least one third sequence is determined by performing repetition decoding on the third sequence based on the second sequence.

In some embodiments, the at least one third sequence is determined by performing repetition decoding based on the second sequence as follows. The at least one third sequence is determined by performing repetition decoding on a sequence formed by the at least one third sequence based on the second sequence.

In some embodiments, when the number of bits in the second sequence is *N*×*X*×*K,* the number of repetitions of the repetition decoding is *N*, and the number of bits in each of the at least one third sequence is *X,* the number of bits in the first sequence is *K*, where *N, X,* and *K* each are a positive integer.

In some embodiments, the third sequence is matched with any one of the following decoding schemes: NRZ decoding, Manchester decoding, unipolar RZ decoding, Miller decoding, DBP decoding, differential decoding, pulse interval decoding, and FM0 decoding.

In some embodiments, the first sequence includes a fourth sequence and a CRC bit corresponding to the fourth sequence.

In some embodiments, the CRC bit is positioned after the fourth sequence.

In some embodiments, the first sequence includes a fourth sequence and at least one parity bit.

In some embodiments, the at least one parity bit is positioned after the fourth sequence.

In some embodiments, the fourth sequence is a sequence to be divided, the sequence to be divided includes at least one check group after division, and a first parity bit among the at least one parity bit is positioned after a first check group among the at least one check group.

In some embodiments, the first sequence includes a fourth sequence, a CRC bit corresponding to the fourth sequence, and at least one parity bit.

In some embodiments, the first sequence sequentially includes: the fourth sequence, the CRC bit, and the at least one parity bit.

In some embodiments, the first sequence sequentially includes: the fourth sequence, the at least one parity bit, and the CRC bit.

In some embodiments, the fourth sequence is a sequence to be divided, the sequence to be divided includes at least one check group after division, a first parity bit among the at least one parity bit is positioned after a first check group among the at least one check group, and the CRC bit is positioned after a sequence formed by the fourth sequence and the at least one parity bit.

In some embodiments, a sequence formed by the fourth sequence and the CRC bit is a sequence to be divided, the sequence to be divided includes at least one check group after division, and the first parity bit among the at least one parity bit is positioned after a first check group among the at least one check group.

In some embodiments, a check group used for determining the first parity bit among the at least one check group does not overlap a check group used for determining a parity bit other than the first parity bit among the at least one check group.

In some embodiments, the first parity bit is determined according to the first check group.

In some embodiments, the check group used for determining the first parity bit among the at least one check group at least partially overlaps the check group used for determining the parity bits other than the first parity bit among the at least one check group.

In some embodiments, the first parity bit is determined according to the first check group and a check group prior to the first check group.

In some embodiments, the first parity bit is determined according to the first check group, a check group prior to the first check group, and a parity bit determined based on the check group prior to the first check group among the at least one parity bit.

In some embodiments, the fourth sequence is a data bit sequence.

In some embodiments, the method 300 can further include the following. The maximum number of bits in each of the at least one check group is obtained. Every consecutive maximum number of bits in the sequence to be divided is divided into one of the at least one check group.

In some embodiments, the number of bits in each of the at least one check group is the maximum number of bits.

In some embodiments, a final check group among the at least one check group includes a padding bit.

In some embodiments, the number of bits in each of the at least one check group except a final check group is the maximum number of bits, and the number of bits in the final check group is less than the maximum number of bits.

In some embodiments, the maximum number of bits is configured by a network device, or the maximum number of bits is predefined.

In some embodiments, the maximum number of bits in each of the at least one check group is obtained as follows. The maximum number of bits is determined based on the number of bits in the sequence to be divided.

In some embodiments, the maximum number of bits is determined based on the number of bits in the sequence to be divided as follows. A third mapping relationship is obtained, where the third mapping relationship includes a correspondence between multiple values and multiple candidate numbers of bits, and the multiple values include a third value with a minimum difference from the number of bits in the sequence to be divided. A candidate number of bits corresponding to the third value is determined as the maximum number of bits.

In some embodiments, the third mapping relationship is a mapping relationship determined by the zero-power device from multiple mapping relationships configured by the network device, or the third mapping relationship is a mapping relationship determined by the zero-power device from multiple predefined mapping relationships.

In some embodiments, the maximum number of bits is determined based on the number of bits in the sequence to be divided as follows. A fourth mapping relationship is obtained, where the fourth mapping relationship includes a correspondence between multiple value ranges and multiple numbers of bits, and the number of bits in the sequence to be divided is in a first value range among the multiple value ranges. The number of bits corresponding to the first value range is determined as the maximum number of bits.

In some embodiments, the fourth mapping relationship is a mapping relationship determined by the zero-power device from multiple mapping relationships configured by the network device, or the fourth mapping relationship is a mapping relationship determined by the zero-power device from multiple predefined mapping relationships.

In some embodiments, the maximum number of bits in each of the at least one check group is obtained as follows. A fourth value is obtained, where the fourth value indicates the number of the at least one check group and/or the number of the at least one parity bit. The maximum number of bits is determined based on the number of bits in the sequence to be divided and the fourth value.

In some embodiments, the maximum number of bits is determined based on the number of bits in the sequence to be divided and the fourth value as follows. The maximum number of bits is determined based on a ratio of the number of bits in the sequence to be divided to the fourth value.

In some embodiments, the fourth value is configured by the network device, or the fourth value is predefined.

In some embodiments, before repetition decoding is performed based on the second sequence to be decoded, the method further includes the following. The second sequence is deinterleaved.

In some embodiments, before repetition decoding is performed based on the second sequence to be decoded, the method further includes the following. First decoding on the second sequence is performed.

In some embodiments, before the operations at S310, the method 300 can further include the following. A first signal is received. The second sequence is obtained by demodulating the first signal or performing first decoding on a demodulated first signal.

In some embodiments, the first sequence includes a prefix sequence.

In some embodiments, the second sequence is obtained by demodulating the first signal or performing first decoding on the demodulated first signal as follows. A fifth sequence is obtained by demodulating the first signal or performing first decoding on the demodulated first signal, where the fifth sequence includes the second sequence and a prefix sequence.

In some embodiments, the prefix sequence is configured by the network device, the prefix sequence is predefined, or the prefix sequence is determined according to the number of repetitions of the repetition decoding.

In some embodiments, a demodulation scheme applied to the first signal includes at least one of: ASK modulation, OOK modulation, FSK modulation, or PSK modulation.

In some embodiments, the first decoding includes at least one of: NRZ decoding, unipolar RZ decoding, Manchester decoding, Miller decoding, DBP decoding, differential decoding, pulse interval decoding, or FM0 decoding.

In some embodiments, before the operations at S310, the method 300 can further include the following. The second sequence is received.

In some embodiments, the number of repetitions of the repetition decoding is determined by the zero-power device based on at least one of the following information of the first sequence: a data block size, a bitrate, or a communication rate.

In some embodiments, the number of repetitions of the repetition decoding is configured by the network device, or the number of repetitions of the repetition decoding is predefined.

It may be understood that, the operations in the wireless communication method 300 can be referred to the corresponding operations in the wireless communication method 200, which will not be repeated herein for brevity.

The method embodiments of the present disclosure are described in detail above with reference to FIG. 16 to FIG. 21, and the apparatus embodiments of the present disclosure will be described in detail below with reference to FIG. 22 to FIG. 25.

FIG. 22 is a schematic block diagram of a sending device 400 provided in embodiments of the present disclosure. It may be noted that, the sending device 400 may be a network device or a terminal device. For example, the terminal device may be a zero-power device, and the zero-power device may be a device that supports at least one of the following communication modes: communication through backscattering or communication through active transmission. For example, the zero-power device may be a conventional NR terminal loaded with or integrated with a backscatter communication module.

As illustrated in FIG. 22, the sending device 400 can include an encoding unit 410. The encoding unit 410 is configured to obtain a second sequence by performing repetition encoding based on a first sequence to be encoded.

In some embodiments, the encoding unit 410 is specifically configured to obtain the second sequence by performing repetition encoding on values of bits in the first sequence.

In some embodiments, the encoding unit 410 is specifically configured to obtain a second sequence by performing repetition encoding based on a first sequence to be encoded.

In some embodiments, when the number of bits in the first sequence is *K* and the number of repetitions of the repetition encoding is *N,* the number of bits in the second sequence is *N*×*K*, where *N* and *K* each are a positive integer.

In some embodiments, the encoding unit 410 is specifically configured to determine at least one third sequence based on the first sequence. The encoding unit 410 is specifically configured to obtain the second sequence by performing repetition encoding based on the at least one third sequence.

In some embodiments, the encoding unit 410 is specifically configured to determine the third sequence based on values of bits in the first sequence.

In some embodiments, the encoding unit 410 is specifically configured to obtain a first mapping relationship, where the first mapping relationship includes a correspondence between a first value and a first candidate sequence and a correspondence between a second value and a second candidate sequence. When a value of a first bit in the first sequence is the first value, the encoding unit 410 is specifically configured to determine the first candidate sequence as the third sequence. When the value of the first bit is the second value, the encoding unit 410 is specifically configured to determine the second candidate sequence as the third sequence.

In some embodiments, the first candidate sequence and the second candidate sequence have different values at the same bit position.

In some embodiments, the encoding unit 410 is specifically configured to divide the first sequence into at least one encoding group. The encoding unit 410 is specifically configured to determine the third sequence based on a value of each of the at least one encoding grouping.

In some embodiments, the encoding unit 410 is specifically configured to obtain a second mapping relationship, where the second mapping relationship includes a correspondence between multiple values and multiple candidate sequences, and the multiple values include the value of each of at least one encoding group. The encoding unit 410 is specifically configured to determine a candidate sequence corresponding to the value of each of the at least one encoding group as the third sequence.

In some embodiments, the number of the multiple candidate sequences is positively correlated with the number of bits of each of the multiple values.

In some embodiments, the encoding unit 410 is specifically configured to obtain the second sequence by performing repetition encoding on values of bits in the third sequence.

In some embodiments, the encoding unit 410 is specifically configured to obtain the second sequence by performing repetition encoding on the third sequence.

In some embodiments, the encoding unit 410 is specifically configured to obtain the second sequence by performing repetition encoding on a sequence formed by the at least one third sequence.

In some embodiments, when the number of bits in the first sequence is *K,* the number of repetitions of the repetition encoding is *N,* and the number of bits in each of the at least one third sequence is *X,* the number of bits in the second sequence is *N*×*X*×*K,* where *N, X,* and *K* each are a positive integer.

In some embodiments, the third sequence is matched with any one of the following encoding schemes: NRZ encoding, Manchester encoding, unipolar Z encoding, Miller encoding, DBP encoding, differential encoding, PIE, and FM0 encoding.

In some embodiments, the first sequence includes a fourth sequence and a CRC bit corresponding to the fourth sequence.

In some embodiments, the CRC bit is positioned after the fourth sequence.

In some embodiments, the first sequence includes a fourth sequence and at least one parity bit.

In some embodiments, the at least one parity bit is positioned after the fourth sequence.

In some embodiments, the fourth sequence is a sequence to be divided, the sequence to be divided includes at least one check group after division, and a first parity bit of the at least one parity bit is positioned after a first check group of the at least one check group.

In some embodiments, the first sequence includes a fourth sequence, a CRC bit corresponding to the fourth sequence, and at least one parity bit.

In some embodiments, the first sequence sequentially includes: the fourth sequence, the CRC bit, and the at least one parity bit.

In some embodiments, the first sequence sequentially includes: the fourth sequence, the at least one parity bit, and the CRC bit.

In some embodiments, the fourth sequence is a sequence to be divided, the sequence to be divided includes at least one check group after division, a first parity bit among the at least one parity bit is positioned after a first check group among the at least one check group, and the CRC bit is positioned after a sequence formed by the fourth sequence and the at least one parity bit.

In some embodiments, a sequence formed by the fourth sequence and the CRC bit is a sequence to be divided, the sequence to be divided includes at least one check group after division, and a first parity bit among the at least one parity bit is positioned after a first check group among the at least one check group.

In some embodiments, a check group used for determining the first parity bit among the at least one check group does not overlap a check group used for determining a parity bit other than the first parity bit among the at least one check group.

In some embodiments, the first parity bit is determined according to the first check group.

In some embodiments, the check group used for determining the first parity bit among the at least one check group at least partially overlaps the check group used for determining the parity bit other than the first parity bit among the at least one check group.

In some embodiments, the first parity bit is determined according to the first check group and a check group prior to the first check group.

In some embodiments, the first parity bit is determined according to the first check group, a check group prior to the first check group, and a parity bit determined based on the check group prior to the first check group among the at least one parity bit.

In some embodiments, the fourth sequence is a data bit sequence.

In some embodiments, the encoding unit 410 is further configured to obtain the maximum number of bits in each of the at least one check group. Every consecutive maximum number of bits in the sequence to be divided is divided into one of the at least one check group.

In some embodiments, the number of bits in each of the at least one check group is the maximum number of bits.

In some embodiments, the encoding unit 410 is specifically configured to obtain a final check group among the at least one check group based on undivided bits and a padding bit when the number of undivided bits in the sequence to be divided is less than the maximum number of bits, where a total number of the undivided bits and the padding bit is the maximum number of bits.

In some embodiments, the number of bits in each of the at least one check group except a final check group is the maximum number of bits, and the number of bits in the final check group is less than the maximum number of bits.

In some embodiments, the encoding unit 410 is specifically configured to determine the undivided bits as a final check group among the at least one check group when the number of undivided bits in the sequence to be divided is less than the maximum number of bits.

In some embodiments, the maximum number of bits is configured by the network device, or the maximum number of bits is predefined.

In some embodiments, the encoding unit 410 is specifically configured to determine the maximum number of bits based on the number of bits in the sequence to be divided.

In some embodiments, the encoding unit 410 is specifically configured to obtain a third mapping relationship, where the third mapping relationship includes a correspondence between multiple values and multiple candidate numbers of bits, and the multiple values include a third value with a minimum difference from the number of bits in the sequence to be divided. The encoding unit 410 is specifically configured to determine a candidate number of bits corresponding to the third value as the maximum number of bits.

In some embodiments, the third mapping relationship is a mapping relationship determined by the zero-power device from multiple mapping relationships configured by the network device, or the third mapping relationship is a mapping relationship determined by the zero-power device from multiple predefined mapping relationships.

In some embodiments, the encoding unit 410 is specifically configured to obtain a fourth mapping relationship, where the fourth mapping relationship includes a correspondence between multiple value ranges and multiple numbers of bits, and the number of bits in the sequence to be divided is in a first value range among the multiple value ranges. The encoding unit 410 is specifically configured to determine the number of bits corresponding to the first value range as the maximum number of bits.

In some embodiments, the fourth mapping relationship is a mapping relationship determined by the zero-power device from multiple mapping relationships configured by the network device, or the fourth mapping relationship is a mapping relationship determined by the zero-power device from multiple predefined mapping relationships.

In some embodiments, the encoding unit 410 is specifically configured to obtain a fourth value, where the fourth value indicates the number of the at least one check group and/or the number of the at least one parity bit. The encoding unit 410 is specifically configured to determine the maximum number of bits based on the number of bits in the sequence to be divided and the fourth value.

In some embodiments, the encoding unit 410 is specifically configured to determine the maximum number of bits based on a ratio of the number of bits in the sequence to be divided to the fourth value.

In some embodiments, the fourth value is configured by the network device, or the fourth value is predefined.

In some embodiments, the encoding unit 410 is further configured to interleave the second sequence.

In some embodiments, the encoding unit 410 is further configured to perform first encoding on the second sequence.

In some embodiments, the encoding unit 410 is further configured to obtain a first signal by modulating based on the second sequence or a sequence obtained by performing first encoding on the second sequence, and send the first signal.

In some embodiments, the first sequence includes a prefix sequence. The encoding unit 410 is specifically configured to obtain the first signal by modulating the second sequence or the sequence obtained by performing first encoding on the second sequence.

In some embodiments, the encoding unit 410 is specifically configured to obtain a fifth sequence by adding a prefix sequence to the second sequence or the sequence obtained by performing first encoding on the second sequence. The encoding unit 410 is specifically configured to obtain the first signal by modulating the fifth sequence.

In some embodiments, the prefix sequence is configured by the network device, the prefix sequence is predefined, or the prefix sequence is determined according to the number of repetitions of the repetition encoding.

In some embodiments, a modulation scheme applied to the second sequence or the sequence obtained by performing first encoding on the second sequence includes at least one of: ASK modulation, OOK modulation, FSK modulation, or PSK modulation.

In some embodiments, the first encoding includes at least one of: NRZ encoding, unipolar RZ encoding, Manchester encoding, Miller encoding, DBP encoding, differential encoding, PIE, or FM0 encoding.

In some embodiments, the encoding unit 410 is further configured to send the second sequence.

In some embodiments, the encoding unit 410 is further configured to determine the number of repetitions of the repetition encoding based on at least one of the following information of the first sequence: a data block size, a bitrate, or a communication rate.

In some embodiments, the number of repetitions of the repetition encoding is configured by the network device, or the number of repetitions of the repetition encoding is predefined.

It may be understood that, apparatus embodiments and method embodiments correspond to each other. For similar elaborations, reference can be made to the method embodiments. Specifically, the sending device 400 illustrated in FIG. 22 may correspond to a corresponding entity for implementing the method 200 in embodiments of the present disclosure, and the above and other operations and/or functions of various units of the sending device 400 are respectively intended for implementing corresponding operations in the method illustrated in FIG. 11, which will not be repeated herein for the sake of simplicity.

FIG. 23 is a schematic block diagram of a receiving device 500 provided in embodiments of the present disclosure. It may be noted that, the receiving device 500 may be a network device or a terminal device. For example, the terminal device may be a zero-power device, and the zero-power device may be a device that supports at least one of the following communication modes: communication through backscattering or communication through active transmission. For example, the zero-power device may be a conventional NR terminal loaded with or integrated with a backscatter communication module.

As illustrated in FIG. 23, the receiving device 500 can include a decoding unit 510. The decoding unit 510 is configured to obtain a first sequence by performing repetition decoding based on a second sequence to be decoded.

In some embodiments, the decoding unit 510 is specifically configured to obtain the first sequence by performing repetition decoding on values of bits in the first sequence based on the second sequence.

In some embodiments, the decoding unit 510 is specifically configured to obtain the first sequence by performing repetition decoding on the first sequence based on the second sequence.

In some embodiments, when the number of bits in the second sequence is *N*×*K* and the number of repetitions of the repetition decoding is *N,* the number of bits in the second sequence is *K*, where *N* and *K* each are a positive integer.

In some embodiments, the decoding unit 510 is specifically configured to determine at least one third sequence by performing repetition decoding based on the second sequence. The decoding unit 510 is specifically configured to determine the first sequence based on the at least one third sequence.

In some embodiments, the decoding unit 510 is specifically configured to determine values of bits in the first sequence based on the third sequence.

In some embodiments, the decoding unit 510 is specifically configured to obtain a first mapping relationship, where the first mapping relationship includes a correspondence between a first value and a first candidate sequence and a correspondence between a second value and a second candidate sequence. The decoding unit 510 is specifically configured to determine the first value as a value of a first bit in the first sequence when the third sequence is the first candidate sequence. The decoding unit 510 is specifically configured to determine the second value as the value of the first bit when the third sequence is the second candidate sequence.

In some embodiments, the first candidate sequence and the second candidate sequence have different values at the same bit position.

In some embodiments, the decoding unit 510 is specifically configured to determine at least one decoding group based on the at least one third sequence, where each of the at least one decoding group includes one or more bits in the first sequence.

In some embodiments, the decoding unit 510 is specifically configured to obtain a second mapping relationship, where the second mapping relationship includes a correspondence between multiple values and multiple candidate sequences, and the multiple candidate sequences include the at least one third sequence. The decoding unit 510 is specifically configured to determine a value corresponding to each of the at least one third sequence as the at least one decoding group.

In some embodiments, the number of the multiple candidate sequences is positively correlated with the number of bits of each of the multiple values.

In some embodiments, the decoding unit 510 is specifically configured to determine the at least one third sequence by performing repetition decoding on values of bits in the third sequence based on the second sequence.

In some embodiments, the decoding unit 510 is specifically configured to determine the at least one third sequence by performing repetition decoding on the third sequence based on the second sequence.

In some embodiments, the decoding unit 510 is specifically configured to determine the at least one third sequence by performing repetition decoding on a sequence formed by the at least one third sequence based on the second sequence.

In some embodiments, when the number of bits in the second sequence is *N*×*X*×*K,* the number of repetitions of the repetition decoding is *N*, and the number of bits in each of the at least one third sequence is *X,* the number of bits in the first sequence is *K*, where *N, X,* and *K* each are a positive integer.

In some embodiments, the third sequence is matched with any one of the following decoding schemes: NRZ decoding, Manchester decoding, unipolar RZ decoding, Miller decoding, DBP decoding, differential decoding, pulse interval decoding, and FM0 decoding.

In some embodiments, the first sequence includes a fourth sequence and a CRC bit corresponding to the fourth sequence.

In some embodiments, the CRC bit is positioned after the fourth sequence.

In some embodiments, the first sequence includes a fourth sequence and at least one parity bit.

In some embodiments, the at least one parity bit is positioned after the fourth sequence.

In some embodiments, the fourth sequence is a sequence to be divided, the sequence to be divided includes at least one check group after division, and a first parity bit among the at least one parity bit is positioned after a first check group among the at least one check group.

In some embodiments, the first sequence includes a fourth sequence, a CRC bit corresponding to the fourth sequence, and at least one parity bit.

In some embodiments, the first sequence sequentially includes: the fourth sequence, the CRC bit, and the at least one parity bit.

In some embodiments, the first sequence sequentially includes: the fourth sequence, the at least one parity bit, and the CRC bit.

In some embodiments, the fourth sequence is a sequence to be divided, the sequence to be divided includes at least one check group after division, a first parity bit among the at least one parity bit is positioned after a first check group among the at least one check group, and the CRC bit is positioned after a sequence formed by the fourth sequence and the at least one parity bit.

In some embodiments, a sequence formed by the fourth sequence and the CRC bit is a sequence to be divided, the sequence to be divided includes at least one check group after division, and a first parity bit among the at least one parity bit is positioned after a first check group among the at least one check group.

In some embodiments, a check group used for determining the first parity bit among the at least one check group does not overlap a check group used for determining a parity bit other than the first parity bit among the at least one check group.

In some embodiments, the first parity bit is determined according to the first check group.

In some embodiments, the check group used for determining the first parity bit among the at least one check group at least partially overlaps the check group used for determining the parity bits other than the first parity bit among the at least one check group.

In some embodiments, the first parity bit is determined according to the first check group and a check group prior to the first check group.

In some embodiments, the first parity bit is determined according to the first check group, a check group prior to the first check group, and a parity bit determined based on the check group prior to the first check group among the at least one parity bit.

In some embodiments, the fourth sequence is a data bit sequence.

In some embodiments, the decoding unit 510 is further configured to obtain the maximum number of bits in each of the at least one check group. Every consecutive maximum number of bits in the sequence to be divided is divided into one of the at least one check group.

In some embodiments, the number of bits in each of the at least one check group is the maximum number of bits.

In some embodiments, a final check group among the at least one check group includes a padding bit.

In some embodiments, the number of bits in each of the at least one check group except a final check group is the maximum number of bits, and the number of bits in the final check group is less than the maximum number of bits.

In some embodiments, the maximum number of bits is configured by the network device, or the maximum number of bits is predefined.

In some embodiments, the decoding unit 510 is specifically configured to determine the maximum number of bits based on the number of bits in the sequence to be divided.

In some embodiments, the decoding unit 510 is specifically configured to obtain a third mapping relationship, where the third mapping relationship includes a correspondence between multiple values and multiple candidate numbers of bits, and the multiple values include a third value with a minimum difference from the number of bits in the sequence to be divided. The decoding unit 510 is specifically configured to determine a candidate number of bits corresponding to the third value as the maximum number of bits.

In some embodiments, the third mapping relationship is a mapping relationship determined by the zero-power device from multiple mapping relationships configured by the network device, or the third mapping relationship is a mapping relationship determined by the zero-power device from multiple predefined mapping relationships.

In some embodiments, the decoding unit 510 is specifically configured to obtain a fourth mapping relationship, where the fourth mapping relationship includes a correspondence between multiple value ranges and multiple numbers of bits, and the number of bits in the sequence to be divided is in a first value range among the multiple value ranges. The decoding unit 510 is specifically configured to determine the number of bits corresponding to the first value range as the maximum number of bits.

In some embodiments, the fourth mapping relationship is a mapping relationship determined by the zero-power device from multiple mapping relationships configured by the network device, or the fourth mapping relationship is a mapping relationship determined by the zero-power device from multiple predefined mapping relationships.

In some embodiments, the decoding unit 510 is specifically configured to obtain a fourth value, where the fourth value indicates the number of the at least one check group and/or the number of the at least one parity bit. The decoding unit 510 is specifically configured to determine the maximum number of bits based on the number of bits in the sequence to be divided and the fourth value.

In some embodiments, the decoding unit 510 is specifically configured to determine the maximum number of bits based on a ratio of the number of bits in the sequence to be divided to the fourth value.

In some embodiments, the fourth value is configured by the network device, or the fourth value is predefined.

In some embodiments, before repetition decoding is performed based on the second sequence to be decoded, the decoding unit 510 is further configured to de-interleave the second sequence.

In some embodiments, before repetition decoding is performed based on the second sequence to be decoded, the decoding unit 510 is further configured to perform first decoding on the second sequence.

In some embodiments, the decoding unit 510 is further configured to receive a first signal. The decoding unit 510 is further configured to obtain the second sequence by demodulating the first signal or performing first decoding on a demodulated first signal.

In some embodiments, the first sequence includes a prefix sequence.

In some embodiments, the decoding unit 510 is specifically configured to obtain a fifth sequence by demodulating the first signal or performing first decoding on the demodulated first signal, where the fifth sequence includes the second sequence and a prefix sequence.

In some embodiments, the prefix sequence is configured by the network device, or the prefix sequence is predefined, or the prefix sequence is determined according to the number of repetitions of the repetition decoding.

In some embodiments, a demodulation scheme applied to the first signal includes at least one of: ASK modulation, OOK modulation, FSK modulation, or PSK modulation.

In some embodiments, the first decoding includes at least one of: NRZ decoding, unipolar RZ decoding, Manchester decoding, Miller decoding, DBP decoding, differential decoding, pulse interval decoding, or FM0 decoding.

In some embodiments, before repetition decoding is performed based on the second sequence to be decoded, the decoding unit 510 is further configured to receive the second sequence.

In some embodiments, the number of repetitions of the repetition decoding is determined by the zero-power device based on at least one of the following information of the first sequence: a data block size, a bitrate, or a communication rate.

In some embodiments, the number of repetitions of the repetition decoding is configured by the network device, or the number of repetitions of the repetition decoding is predefined.

It may be understood that, apparatus embodiments and method embodiments correspond to each other. For similar elaborations, reference can be made to the method embodiments. Specifically, the receiving device 500 illustrated in FIG. 23 may correspond to a corresponding entity for implementing the method 300 in embodiments of the present disclosure, and the above and other operations and/or functions of various units of the receiving device 500 are respectively intended for implementing corresponding operations in the method illustrated in FIG. 11, which will not be repeated herein for the sake of simplicity.

The communication device in embodiments of the present disclosure has been described above from the perspective of functional modules with reference to the accompanying drawings. It may be understood that, the functional module may be implemented in the form of hardware, or may be implemented by an instruction in the form of software, or may be implemented by a combination of hardware and software module. Specifically, each step of the method embodiments of the present disclosure may be completed by an integrated logic circuit of hardware in a processor and/or an instruction in the form of software. The steps of the method disclosed in embodiments of the present disclosure may be directly implemented by a hardware decoding processor, or may be performed by hardware and software modules in the decoding processor. Optionally, the software module can be located in a storage medium such as a random access memory (RAM), a flash memory, a read-only memory (ROM), a programmable ROM (PROM), or an electrically erasable programmable memory, registers, and the like. The storage medium is located in a memory. The processor reads the information in the memory, and completes the steps of the foregoing method embodiments with the hardware of the processor.

For example, the processing unit and the communication unit may be implemented by a processor and a transceiver, respectively.

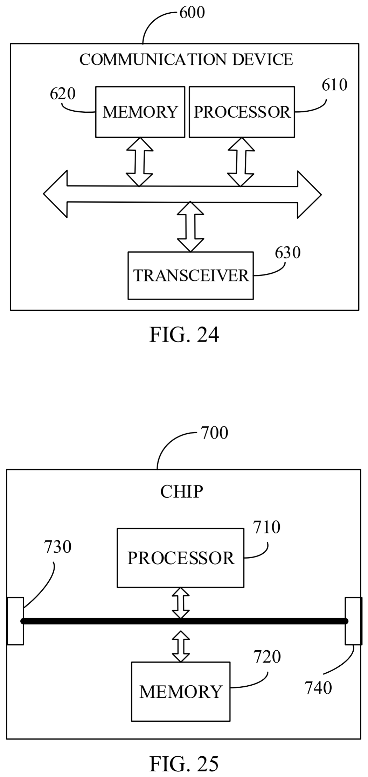

FIG. 24 is a schematic structural diagram of a communication device 600 provided in embodiments of the present disclosure.

As illustrated in FIG. 24, the communication device 600 may include a processor 610.

The processor 610 can invoke and execute computer programs stored in a memory, to perform the method in embodiments of the present disclosure.

As illustrated in FIG. 24, the communication device 600 may further include the memory 620.

The memory 620 can be configured to store information, or store codes, instructions, etc., that are executed by the processor 610. The processor 610 can invoke and execute the computer programs stored in the memory 620, to perform the method in embodiments of the present disclosure. The memory 620 may be a separate device independent of the processor 610, or may be integrated into the processor 610.

As illustrated in FIG. 24, the communication device 600 can further include a transceiver 630.

The processor 610 can control the transceiver 630 to communicate with other devices, specifically, to transmit information or data to other devices or to receive information or data transmitted by other devices. The transceiver 630 may include a transmitter and a receiver. The transceiver 630 may further include an antenna, where one or more antennas can be provided.

It may be understood that, various components in the communication device 600 are connected together via a bus system. In addition to a data bus, the bus system may further include a power bus, a control bus, and a status signal bus.

It may also be understood that, the communication device 600 may be operable as the sending device and the receiving device in embodiments of the present disclosure, and the communication device 600 can implement the operations performed by the sending device and the receiving device in various methods in embodiments of the present disclosure. In other words, the communication device 600 in embodiments of the present disclosure can correspond to the sending device 400 in embodiments of the present disclosure, and can correspond to a corresponding entity for implementing the method 200 according to embodiments of the present disclosure, which will not be repeated herein for the sake of simplicity. Similarly, the communication device 600 in embodiments of the present disclosure can correspond to the receiving device 500 in embodiments of the present disclosure, and can correspond to a corresponding entity for implementing the method 300 according to embodiments of the present disclosure, which will not be repeated herein for the sake of simplicity.

In addition, embodiments of the present disclosure provide a chip.

For example, the chip may be an integrated circuit chip with signal processing capabilities, which can implement or execute various methods, steps, or logic blocks disclosed in embodiments of the present disclosure. The chip may also be referred to as a system-on-chip (SOC). Optionally, the chip is applicable to various communication devices, to cause a communication device equipped with the chip to perform various methods, steps, or logic blocks disclosed in embodiments of the present disclosure.

FIG. 25 is a schematic structural diagram of a chip 700 according to embodiments of the present disclosure.

As illustrated in FIG. 25, the chip 700 includes a processor 710.

The processor 710 can invoke and execute computer programs stored in a memory to perform the method in embodiments of the present disclosure.

As illustrated in FIG. 25, the chip 700 may further include the memory 720.

The processor 710 can invoke and execute the computer programs stored in the memory 720 to perform the method in embodiments of the present disclosure. The memory 720 can be configured to store indication information, or store codes, instructions, etc. executable by the processor 710. The memory 720 may be a separate device independent of the processor 710, or may be integrated into the processor 710.

As illustrated in FIG. 25, the chip 700 may further include an input interface 730.

The processor 710 can control the input interface 730 to communicate with other devices or chips, specifically, to obtain information or data transmitted by other devices or chips.

As illustrated in FIG. 25, the chip 700 may further include an output interface 740.

The processor 710 can control the output interface 740 to communicate with other devices or chips, specifically, to output information or data to other devices or chips.

It may be understood that, the chip 700 is applicable to the zero-power device in embodiments of the present disclosure. The chip can implement the operations performed by the zero-power device in various methods in embodiments of the present disclosure, which will not be repeated herein for the sake of simplicity.

It may also be understood that, various components in the chip 700 are connected together via a bus system. In addition to a data bus, the bus system may further include a power bus, a control bus, and a status signal bus.

The processor described above may include, but is not limited to, a general-purpose processor, a digital signal processor (DSP), an application-specific integrated circuit (ASIC), a field programmable gate array (FPGA), or other programmable logic devices, discrete gates or transistor logic devices, discrete hardware components, etc.

The processor can be configured to perform or execute the methods, steps, and logic blocks disclosed in embodiments of the present disclosure. The steps of the method disclosed in embodiments of the present disclosure may be directly implemented by a hardware decoding processor, or may be performed by hardware and software modules in the decoding processor. The software module can be located in a storage medium such as an RAM, a flash memory, an ROM, a PROM, an erasable programmable memory, registers, etc. The storage medium is located in the memory. The processor reads the information in the memory, and completes the steps of the method described above with the hardware of the processor.

The memory described above may include, but is not limited to, a volatile memory and/or a non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM).

It may be noted that, the memory described in the present disclosure is intended to include, but is not limited to, these and any other suitable types of memory.

Embodiments of the present disclosure further provide a computer-readable storage medium. The computer-readable storage medium is configured to store a computer program. The computer-readable storage medium stores one or more programs. The one or more programs include instructions which, when executed by a portable electronic device including multiple application programs, cause the portable electronic device to perform the wireless communication method provided in embodiments of the present disclosure. For example, the computer-readable storage medium is applicable to the sending device in embodiments of the present disclosure. The computer programs are operable with a computer to implement the operations performed by the sending device in various methods in embodiments of the present disclosure, which will not be repeated herein for the sake of simplicity. For another example, the computer-readable storage medium is applicable to the receiving device in embodiments of the present disclosure. The computer programs are operable with a computer to implement the operations performed by the receiving device in various methods in embodiments of the present disclosure, which will not be repeated herein for the sake of simplicity.

Embodiments of the present disclosure further provide a computer program product. The computer program product includes a computer program. For example, the computer program product is applicable to the sending device in embodiments of the present disclosure. The computer programs are operable with a computer to implement the operations performed by the sending device in various methods in embodiments of the present disclosure, which will not be repeated herein for the sake of simplicity. For another example, the computer program product is applicable to the receiving device in embodiments of the present disclosure. The computer programs are operable with a computer to implement the operations performed by the receiving device in various methods in embodiments of the present disclosure, which will not be repeated herein for the sake of simplicity.

Embodiments of the present disclosure further provide a computer program. The computer program, when executed by a computer, is operable with the computer to perform the wireless communication method provided in embodiments of the present disclosure. For example, the computer program is applicable to the sending device in embodiments of the present disclosure. The computer program, when executed by a computer, is operable with the computer to implement the operations performed by the sending device in various methods in embodiments of the present disclosure, which will not be repeated herein for the sake of simplicity. For example, the computer program is applicable to the receiving device in embodiments of the present disclosure. The computer program, when executed by a computer, is operable with the computer to implement the operations performed by the receiving device in various methods in embodiments of the present disclosure, which will not be repeated herein for the sake of simplicity.

In addition, embodiments of the present disclosure further provide a communication system. The communication system may include the sending device and the receiving device described above, to constitute the communication system 100 illustrated in FIG. 1, which will not be repeated herein for the sake of simplicity. It is to be noted that, the term "system" or the like in the present disclosure may also be referred to as "network management architecture" or "network architecture", etc.

It may also be understood that, the terms used in embodiments of the present disclosure and the appended claims are merely intended for describing the embodiments, rather than limiting embodiments of the present disclosure. For example, the singular form "a/an", "said", "above", and "the" used in embodiments of the present disclosure and the appended claims are also intended to include multiple forms, unless specified otherwise in the context.

Those of ordinary skill in the art will appreciate that units and algorithmic operations of various examples described in connection with embodiments of the present disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods may not be regarded as lying beyond the scope of the present disclosure. If the functions are implemented as software functional units and sold or used as standalone products, they may be stored in a computer-readable storage medium. Based on such an understanding, the essential technical solution, or the portion that contributes to the prior art, or part of the technical solution of the present disclosure may be embodied as software products. The computer software products can be stored in a storage medium and may include multiple instructions that, when executed, can cause a computing device, e.g., a personal computer, a server, a network device, etc., to execute some or all operations of the methods described in various embodiments of the present disclosure. The above storage medium may include various kinds of media that can store program codes, such as a universal serial bus (USB) flash disk, a mobile hard drive, an ROM, an RAM, a magnetic disk, or an optical disk.

It will be evident to those skilled in the art that, for the sake of convenience and simplicity, in terms of the specific working processes of the foregoing systems, apparatuses, and units, reference can be made to the corresponding processes in the foregoing method embodiments, which will not be repeated herein. It will be appreciated that the systems, apparatuses, and methods disclosed in embodiments of the present disclosure may also be implemented in various other manners. For example, the division of units, modules, or assemblies in the foregoing apparatus embodiments is only a division of logical functions, and there may be other manners of division available in practice, e.g., multiple units, modules, or assemblies may be combined or may be integrated into another system, or some features may be ignored or skipped. Separated units/modules/assemblies as illustrated may or may not be physically separated, that is, may reside at one location or may be distributed to multiple networked units. Some or all of the units/modules/assemblies may be selectively adopted according to practical needs to achieve desired objectives of the present disclosure. It is to be noted that, the coupling or direct coupling or communication connection as illustrated or discussed may be an indirect coupling or communication connection through some interface, device, or unit, and may be electrical, mechanical, or otherwise.

The foregoing elaborations are merely embodiments of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A wireless communication method, applied to a zero-power device and comprising:
obtaining a second sequence by performing repetition encoding based on a first sequence to be encoded.

2. The method of claim 1, wherein obtaining the second sequence by performing repetition encoding based on the first sequence to be encoded comprises:
obtaining the second sequence by performing repetition encoding on values of bits in the first sequence.

3. The method of claim 1, wherein obtaining the second sequence by performing repetition encoding based on the first sequence to be encoded comprises:
obtaining the second sequence by performing repetition encoding on the first sequence.

4. The method of claim 2 or 3, wherein when a number of bits in the first sequence is *K* and a number of repetitions of the repetition encoding is *N,* a number of bits in the second sequence is *N*×*K*, wherein *N* and *K* each are a positive integer.

5. The method of claim 1, wherein obtaining the second sequence by performing repetition encoding based on the first sequence to be encoded comprises:
determining at least one third sequence based on the first sequence; and
obtaining the second sequence by performing repetition encoding based on the at least one third sequence.

6. The method of claim 5, wherein determining the at least one third sequence based on the first sequence comprises:
determining the third sequence based on values of bits in the first sequence.

7. The method of claim 6, wherein determining the third sequence based on the values of the bits in the first sequence comprises:
obtaining a first mapping relationship, wherein the first mapping relationship comprises a correspondence between a first value and a first candidate sequence and a correspondence between a second value and a second candidate sequence;
when a value of a first bit in the first sequence is the first value, determining the first candidate sequence as the third sequence; and
when the value of the first bit is the second value, determining the second candidate sequence as the third sequence.

8. The method of claim 7, wherein the first candidate sequence and the second candidate sequence have different values at a same bit position.

9. The method of claim 5, wherein determining the at least one third sequence based on the first sequence comprises:
dividing the first sequence into at least one encoding group; and
determining the third sequence based on a value of each of the at least one encoding group.

10. The method of claim 9, wherein determining the third sequence based on the value of each of the at least one encoding group comprises:
obtaining a second mapping relationship, wherein the second mapping relationship comprises a correspondence between a plurality of values and a plurality of candidate sequences, and the plurality of values comprise the value of each of the at least one encoding group; and
determining a candidate sequence corresponding to the value of each of the at least one encoding group as the third sequence.

11. The method of claim 10, wherein a number of the plurality of candidate sequences is positively correlated with a number of bits of each of the plurality of values.

12. The method of any one of claims 5 to 11, wherein obtaining the second sequence by performing repetition encoding based on the at least one third sequence comprises:
obtaining the second sequence by performing repetition encoding on values of bits in the third sequence.

13. The method of any one of claims 5 to 11, wherein obtaining the second sequence by performing repetition encoding based on the at least one third sequence comprises:
obtaining the second sequence by performing repetition encoding on the third sequence.

14. The method of any one of claims 5 to 11, wherein obtaining the second sequence by performing repetition encoding based on the at least one third sequence comprises:
obtaining the second sequence by performing repetition encoding on a sequence formed by the at least one third sequence.

15. The method of any one of claims 5 to 14, wherein when a number of bits in the first sequence is *K,* a number of repetitions of the repetition encoding is *N,* and a number of bits in each of the at least one third sequence is *X,* a number of bits in the second sequence is *N*×*X*×*K,* wherein *N, X,* and *K* each are a positive integer.

16. The method of any one of claims 5 to 15, wherein the third sequence is matched with any one of the following encoding schemes:
non-return-to-zero (NRZ) encoding, Manchester encoding, unipolar return-to-zero (RZ) encoding, Miller encoding, differential binary phase (DBP) encoding, differential encoding, pulse interval encoding (PIE), and bi-phase space (FM0) encoding.

17. The method of any one of claims 1 to 16, wherein the first sequence comprises a fourth sequence and a cyclic redundancy check (CRC) bit corresponding to the fourth sequence.

18. The method of claim 17, wherein the CRC bit is positioned after the fourth sequence.

19. The method of any one of claims 1 to 16, wherein the first sequence comprises a fourth sequence and at least one parity bit.

20. The method of claim 19, wherein the at least one parity bit is positioned after the fourth sequence.

21. The method of claim 19, wherein the fourth sequence is a sequence to be divided, the sequence to be divided comprises at least one check group after division, and a first parity bit among the at least one parity bit is positioned after a first check group among the at least one check group.

22. The method of any one of claims 1 to 16, wherein the first sequence comprises a fourth sequence, a CRC bit corresponding to the fourth sequence, and at least one parity bit.

23. The method of claim 22, wherein the first sequence sequentially comprises: the fourth sequence, the CRC bit, and the at least one parity bit.

24. The method of claim 22, wherein the first sequence sequentially comprises: the fourth sequence, the at least one parity bit, and the CRC bit.

25. The method of claim 22, wherein the fourth sequence is a sequence to be divided, the sequence to be divided comprises at least one check group after division, a first parity bit among the at least one parity bit is positioned after a first check group among the at least one check group, and the CRC bit is positioned after a sequence formed by the fourth sequence and the at least one parity bit.

26. The method of claim 22, wherein a sequence formed by the fourth sequence and the CRC bit is a sequence to be divided, the sequence to be divided comprises at least one check group after division, and a first parity bit among the at least one parity bit is positioned after a first check group among the at least one check group.

27. The method of any one of claims 21, 25, and 26, wherein a check group used for determining the first parity bit among the at least one check group does not overlap a check group used for determining a parity bit other than the first parity bit among the at least one check group.

28. The method of any one of claims 21, 25, 26, and 27, wherein the first parity bit is determined according to the first check group.

29. The method of any one of claims 21, 25, and 26, wherein a check group used for determining the first parity bit among the at least one check group at least partially overlaps a check group used for determining a parity bit other than the first parity bit among the at least one check group.

30. The method of any one of claims 21, 25, 26, and 29, wherein the first parity bit is determined according to the first check group and a check group prior to the first check group.

31. The method of any one of claims 21, 25, 26, and 29, wherein the first parity bit is determined according to the first check group, a check group prior to the first check group, and a parity bit determined based on the check group prior to the first check group among the at least one parity bit.

32. The method of any one of claims 17 to 31, wherein the fourth sequence is a data bit sequence.

33. The method of any one of claims 21, 25, 26, and 27 to 31, further comprising:
obtaining a maximum number of bits in each of the at least one check group; and
dividing every consecutive maximum number of bits in the sequence to be divided into one of the at least one check group.

34. The method of claim 33, wherein a number of bits in each of the at least one check group is the maximum number of bits.

35. The method of claim 33 or 34, wherein dividing every consecutive maximum number of bits in the sequence to be divided into one of the at least one check group comprises:
when a number of undivided bits in the sequence to be divided is less than the maximum number of bits, obtaining a final check group among the at least one check group based on the undivided bits and a padding bit, wherein
a total number of the undivided bits and the padding bit is the maximum number of bits.

36. The method of claim 33, wherein a number of bits in each of the at least one check group except a final check group is the maximum number of bits, and a number of bits in the final check group is less than the maximum number of bits.

37. The method of claim 33 or 36, wherein dividing every consecutive maximum number of bits in the sequence to be divided into one of the at least one check group comprises:
when a number of undivided bits in the sequence to be divided is less than the maximum number of bits, determining the undivided bits as a final check group among the at least one check group.

38. The method of any one of claims 33 to 37, wherein the maximum number of bits is configured by a network device, or the maximum number of bits is predefined.

39. The method of any one of claims 33 to 37, wherein obtaining the maximum number of bits in each of the at least one check group comprises:
determining the maximum number of bits based on a number of bits in the sequence to be divided.

40. The method of claim 39, wherein determining the maximum number of bits based on the number of bits in the sequence to be divided comprises:
obtaining a third mapping relationship, wherein the third mapping relationship comprises a correspondence between a plurality of values and a plurality of candidate numbers of bits, and the plurality of values comprise a third value with a minimum difference from the number of bits in the sequence to be divided; and
determining a candidate number of bits corresponding to the third value as the maximum number of bits.

41. The method of claim 40, wherein the third mapping relationship is a mapping relationship determined by the zero-power device from a plurality of mapping relationships configured by a network device, or the third mapping relationship is a mapping relationship determined by the zero-power device from a plurality of predefined mapping relationships.

42. The method of claim 39, wherein determining the maximum number of bits based on the number of bits in the sequence to be divided comprises:
obtaining a fourth mapping relationship, wherein the fourth mapping relationship comprises a correspondence between a plurality of value ranges and a plurality of numbers of bits, and the number of bits in the sequence to be divided is in a first value range among the plurality of value ranges; and
determining a number of bits corresponding to the first value range as the maximum number of bits.

43. The method of claim 42, wherein the fourth mapping relationship is a mapping relationship determined by the zero-power device from a plurality of mapping relationships configured by a network device, or the fourth mapping relationship is a mapping relationship determined by the zero-power device from a plurality of predefined mapping relationships.

44. The method of any one of claims 33 to 37, wherein obtaining the maximum number of bits in each of the at least one check group comprises:
obtaining a fourth value, wherein the fourth value indicates a number of the at least one check group and/or a number of the at least one parity bit; and
determining the maximum number of bits based on a number of bits in the sequence to be divided and the fourth value.

45. The method of claim 44, wherein determining the maximum number of bits based on the number of bits in the sequence to be divided and the fourth value comprises:
determining the maximum number of bits based on a ratio of the number of bits in the sequence to be divided to the fourth value.

46. The method of claim 44, wherein the fourth value is configured by a network device, or the fourth value is predefined.

47. The method of any one of claims 1 to 46, further comprising:
interleaving the second sequence.

48. The method of any one of claims 1 to 47, further comprising:
performing first encoding on the second sequence.

49. The method of any one of claims 1 to 48, further comprising:
obtaining a first signal by modulating based on the second sequence or a sequence obtained by performing first encoding on the second sequence; and
sending the first signal.

50. The method of claim 49, wherein
the first sequence comprises a prefix sequence; and
obtaining the first signal by modulating based on the second sequence or the sequence obtained by performing first encoding on the second sequence comprises:
obtaining the first signal by modulating the second sequence or the sequence obtained by performing first encoding on the second sequence.

51. The method of claim 49, wherein obtaining the first signal by modulating based on the second sequence or the sequence obtained by performing first encoding on the second sequence comprises:
obtaining a fifth sequence by adding a prefix sequence to the second sequence or the sequence obtained by performing first encoding on the second sequence; and
obtaining the first signal by modulating the fifth sequence.

52. The method of claim 50 or 51, wherein the prefix sequence is configured by a network device, or the prefix sequence is predefined, or the prefix sequence is determined according to a number of repetitions of the repetition encoding.

53. The method of any one of claims 49 to 52, wherein a modulation scheme applied to the second sequence or the sequence obtained by performing first encoding on the second sequence comprises at least one of: amplitude shift keying (ASK) modulation, on-off keying (OOK) modulation, frequency shift keying (FSK) modulation, or phase shift keying (PSK) modulation.

54. The method of any one of claims 48 to 53, wherein the first encoding comprises at least one of:
NRZ encoding, unipolar RZ encoding, Manchester encoding, Miller encoding, DBP encoding, differential encoding, PIE, or FM0 encoding.

55. The method of any one of claims 1 to 50, further comprising:
sending the second sequence.

56. The method of any one of claims 1 to 55, further comprising:
determining a number of repetitions of the repetition encoding based on at least one of the following information of the first sequence: a data block size, a bitrate, or a communication rate.

57. The method of any one of claims 1 to 55, wherein a number of repetitions of the repetition encoding is configured by a network device, or a number of repetitions of the repetition encoding is predefined.

58. A wireless communication method, applied to a zero-power device and comprising:
obtaining a first sequence by performing repetition decoding based on a second sequence to be decoded.

59. The method of claim 58, wherein obtaining the first sequence by performing repetition decoding based on the second sequence to be decoded comprises:
obtaining the first sequence by performing repetition decoding on values of bits in the first sequence based on the second sequence.

60. The method of claim 58, wherein obtaining the first sequence by performing repetition decoding based on the second sequence to be decoded comprises:
obtaining the first sequence by performing repetition decoding on the first sequence based on the second sequence.

61. The method of claim 59 or 60, wherein when a number of bits in the second sequence is *N*×*K* and a number of repetitions of the repetition decoding is *N,* the number of bits in the second sequence is *K*, wherein *N* and *K* each are a positive integer.

62. The method of claim 58, wherein obtaining the first sequence by performing repetition decoding based on the second sequence to be decoded comprises:
determining at least one third sequence by performing repetition decoding based on the second sequence; and
determining the first sequence based on the at least one third sequence.

63. The method of claim 62, wherein determining the first sequence based on the at least one third sequence comprises:
determining values of bits in the first sequence based on the third sequence.

64. The method of claim 63, wherein determining the values of the bits in the first sequence based on the third sequence comprises:
obtaining a first mapping relationship, wherein the first mapping relationship comprises a correspondence between a first value and a first candidate sequence and a correspondence between a second value and a second candidate sequence;
when the third sequence is the first candidate sequence, determining the first value as a value of a first bit in the first sequence; and
when the third sequence is the second candidate sequence, determining the second value as the value of the first bit.

65. The method of claim 64, wherein the first candidate sequence and the second candidate sequence have different values at a same bit position.

66. The method of claim 62, wherein determining the first sequence based on the at least one third sequence comprises:
determining at least one decoding group based on the at least one third sequence, wherein
each of the at least one decoding group comprises one or more bits in the first sequence.

67. The method of claim 66, wherein determining the at least one decoding group based on the at least one third sequence comprises:
obtaining a second mapping relationship, wherein the second mapping relationship comprises a correspondence between a plurality of values and a plurality of candidate sequences, and the plurality of candidate sequences comprises the at least one third sequence; and
determining a value corresponding to each of the at least one third sequence as the at least one decoding group.

68. The method of claim 67, wherein a number of the plurality of candidate sequences is positively correlated with a number of bits of each of the plurality of values.

69. The method of any one of claims 62 to 68, wherein determining the at least one third sequence by performing repetition decoding based on the second sequence comprises:
determining the at least one third sequence by performing repetition decoding on values of bits in the third sequence based on the second sequence.

70. The method of any one of claims 62 to 68, wherein determining the at least one third sequence by performing repetition decoding based on the second sequence comprises:
determining the at least one third sequence by performing repetition decoding on the third sequence based on the second sequence.

71. The method of any one of claims 62 to 68, wherein determining the at least one third sequence by performing repetition decoding based on the second sequence comprises:
determining the at least one third sequence by performing repetition decoding on a sequence formed by the at least one third sequence based on the second sequence.

72. The method of any one of claims 62 to 71, wherein when a number of bits in the second sequence is *N*×*X*×*K,* a number of repetitions of the repetition decoding is *N,* and a number of bits in each of the at least one third sequence is *X,* a number of bits in the first sequence is *K,* wherein *N, X,* and *K* each are a positive integer.

73. The method of any one of claims 62 to 72, wherein the third sequence is matched with any one of the following decoding schemes:
non-return-to-zero (NRZ) decoding, Manchester decoding, unipolar return-to-zero (RZ) decoding, Miller decoding, differential binary phase (DBP) decoding, differential decoding, pulse interval decoding, and bi-phase space (FM0) decoding.

74. The method of any one of claims 58 to 73, wherein the first sequence comprises a fourth sequence and a cyclic redundancy check (CRC) bit corresponding to the fourth sequence.

75. The method of claim 74, wherein the CRC bit is positioned after the fourth sequence.

76. The method of any one of claims 58 to 73, wherein the first sequence comprises a fourth sequence and at least one parity bit.

77. The method of claim 76, wherein the at least one parity bit is positioned after the fourth sequence.

78. The method of claim 76, wherein the fourth sequence is a sequence to be divided, the sequence to be divided comprises at least one check group after division, and a first parity bit among the at least one parity bit is positioned after a first check group among the at least one check group.

79. The method of any one of claims 58 to 73, wherein the first sequence comprises a fourth sequence, a CRC bit corresponding to the fourth sequence, and at least one parity bit.

80. The method of claim 79, wherein the first sequence sequentially comprises: the fourth sequence, the CRC bit, and the at least one parity bit.

81. The method of claim 79, wherein the first sequence sequentially comprises: the fourth sequence, the at least one parity bit, and the CRC bit.

82. The method of claim 79, wherein the fourth sequence is a sequence to be divided, the sequence to be divided comprises at least one check group after division, a first parity bit among the at least one parity bit is positioned after a first check group among the at least one check group, and the CRC bit is positioned after a sequence formed by the fourth sequence and the at least one parity bit.

83. The method of claim 79, wherein a sequence formed by the fourth sequence and the CRC bit is a sequence to be divided, the sequence to be divided comprises at least one check group after division, and a first parity bit among the at least one parity bit is positioned after a first check group among the at least one check group.

84. The method of any one of claims 78, 82, and 83, wherein a check group used for determining the first parity bit among the at least one check group does not overlap a check group used for determining a parity bit other than the first parity bit among the at least one check group.

85. The method of any one of claims 78, 82, 83, and 84, wherein the first parity bit is determined according to the first check group.

86. The method of any one of claims 78, 82, and 83, wherein a check group used for determining the first parity bit among the at least one check group at least partially overlaps a check group used for determining a parity bits other than the first parity bit among the at least one check group.

87. The method of any one of claims 78, 82, 83, and 86, wherein the first parity bit is determined according to the first check group and a check group prior to the first check group.

88. The method of any one of claims 78, 82, 83, and 86, wherein the first parity bit is determined according to the first check group, a check group prior to the first check group, and a parity bit determined based on the check group prior to the first check group among the at least one parity bit.

89. The method of any one of claims 74 to 88, wherein the fourth sequence is a data bit sequence.

90. The method of any one of claims 78, 82, 83, and 86 to 88, further comprising:
obtaining a maximum number of bits in each of the at least one check group, wherein
every consecutive maximum number of bits in the sequence to be divided is divided into one of the at least one check group.

91. The method of claim 90, wherein a number of bits in each of the at least one check group is the maximum number of bits.

92. The method of claim 90 or 91, wherein a final check group among the at least one check group comprises a padding bit.

93. The method of claim 90, wherein a number of bits in each of the at least one check group except a final check group is the maximum number of bits, and a number of bits in the final check group is less than the maximum number of bits.

94. The method of any one of claims 90 to 93, wherein the maximum number of bits is configured by a network device, or the maximum number of bits is predefined.

95. The method of any one of claims 90 to 93, wherein obtaining the maximum number of bits in each of the at least one check group comprises:
determining the maximum number of bits based on a number of bits in the sequence to be divided.

96. The method of claim 95, wherein determining the maximum number of bits based on the number of bits in the sequence to be divided comprises:
obtaining a third mapping relationship, wherein the third mapping relationship comprises a correspondence between a plurality of values and a plurality of candidate numbers of bits, and the plurality of values comprise a third value with a minimum difference from the number of bits in the sequence to be divided; and
determining a candidate number of bits corresponding to the third value as the maximum number of bits.

97. The method of claim 96, wherein the third mapping relationship is a mapping relationship determined by the zero-power device from a plurality of mapping relationships configured by a network device, or the third mapping relationship is a mapping relationship determined by the zero-power device from a plurality of predefined mapping relationships.

98. The method of claim 95, wherein determining the maximum number of bits based on the number of bits in the sequence to be divided comprises:
obtaining a fourth mapping relationship, wherein the fourth mapping relationship comprises a correspondence between a plurality of value ranges and a plurality of numbers of bits, and the number of bits in the sequence to be divided is in a first value range among the plurality of value ranges; and
determining a number of bits corresponding to the first value range as the maximum number of bits.

99. The method of claim 98, wherein the fourth mapping relationship is a mapping relationship determined by the zero-power device from a plurality of mapping relationships configured by a network device, or the fourth mapping relationship is a mapping relationship determined by the zero-power device from a plurality of predefined mapping relationships.

100. The method of any one of claims 90 to 93, wherein obtaining the maximum number of bits in each of the at least one check group comprises:
obtaining a fourth value, wherein the fourth value indicates a number of the at least one check group and/or a number of the at least one parity bit; and
determining the maximum number of bits based on a number of bits in the sequence to be divided and the fourth value.

101. The method of claim 100, wherein determining the maximum number of bits based on the number of bits in the sequence to be divided and the fourth value comprises:
determining the maximum number of bits based on a ratio of the number of bits in the sequence to be divided to the fourth value.

102. The method of claim 100, wherein the fourth value is configured by a network device, or the fourth value is predefined.

103. The method of any one of claims 58 to 102, wherein before performing repetition decoding based on the second sequence to be decoded, the method further comprises:
de-interleaving the second sequence.

104. The method of any one of claims 58 to 103, wherein before performing repetition decoding based on the second sequence to be decoded, the method further comprises:
performing first decoding on the second sequence.

105. The method of any one of claims 58 to 104, wherein before performing repetition decoding based on the second sequence to be decoded, the method further comprises:
receiving a first signal; and
obtaining the second sequence by demodulating the first signal or performing first decoding on a demodulated first signal.

106. The method of claim 105, wherein the first sequence comprises a prefix sequence.

107. The method of claim 105, wherein obtaining the second sequence by demodulating the first signal or performing first decoding on the demodulated first signal comprises:
obtaining a fifth sequence by demodulating the first signal or performing first decoding on the demodulated first signal, wherein the fifth sequence comprises the second sequence and a prefix sequence.

108. The method of claim 106 or 107, wherein the prefix sequence is configured by a network device, or the prefix sequence is predefined, or the prefix sequence is determined according to a number of repetitions of the repetition decoding.

109. The method of any one of claims 105 to 108, wherein a demodulation scheme applied to the first signal comprises at least one of: amplitude shift keying (ASK) modulation, on-off keying (OOK) modulation, frequency shift keying (FSK) modulation, or phase shift keying (PSK) modulation

110. The method of any one of claims 104 to 109, wherein the first decoding comprises at least one of:
NRZ decoding, unipolar RZ decoding, Manchester decoding, Miller decoding, DBP decoding, differential decoding, pulse interval decoding, or FM0 decoding.

111. The method of any one of claims 58 to 110, further comprising:
receiving the second sequence.

112. The method of any one of claims 58 to 111, wherein a number of repetitions of the repetition decoding is determined by the zero-power device based on at least one of the following information of the first sequence: a data block size, a bitrate, or a communication rate.

113. The method of any one of claims 58 to 111, wherein a number of repetitions of the repetition decoding is configured by a network device, or a number of repetitions of the repetition decoding is predefined.

114. A zero-power device, comprising:
an encoding unit configured to obtain a second sequence by performing repetition encoding based on a first sequence to be encoded.

115. A zero-power device, comprising:
a decoding unit configured to obtain a first sequence by performing repetition decoding based on a second sequence to be decoded.

116. A zero-power device, comprising:
a memory configured to store a computer program; and
a processor configured to invoke and execute the computer program stored in the memory, to cause the zero-power device to perform the method of any one of claims 1 to 57.

117. A zero-power device, comprising:
a memory configured to store a computer program; and
a processor configured to invoke and execute the computer program stored in the memory, to cause the zero-power device to perform the method of any one of claims 58 to 113.

118. A chip, comprising:
a processor configured to invoke and execute a computer program stored in a memory, to cause a device equipped with the chip to perform the method of any one of claims 1 to 57 or the method of any one of claims 58 to 113.

119. A computer-readable storage medium configured to store a computer program which, when executed on a computer, causes the computer to perform the method of any one of claims 1 to 57 or the method of any one of claims 58 to 113.

120. A computer program product comprising computer program instructions that cause a computer to perform the method of any one of claims 1 to 57 or the method of any one of claims 58 to 113.

121. A computer program being operable with a computer to perform the method of any one of claims 1 to 57 or the method of any one of claims 58 to 113.
